# EUROPEAN PATENT APPLICATION

(11) **EP 4 838 603 A1**
(43) Date of publication of application: **11.11.2026**
(21) Application number: 26177151.3
(22) Date of filing: 07.05.2026
(51) Int. Cl.: H01M 10/04, H01M 50/15, H01M 50/103

(54) **METHOD FOR MANUFACTURING LID ASSEMBLY, LID ASSEMBLY, AND CELL**

(30) Priority: 09.05.2025 CN 202510596516; 25.12.2025 CN 202511982413
(71) Applicant: AESC Japan Ltd., Yokohama-shi, Kanagawa 220-0012 (JP)
(72) Inventor: GAO, Gang, Jiangyin City, Wuxi City (CN); ZHAO, Gongwei, Jiangyin City, Wuxi City (CN)
(74) Representative: Becker, Eberhard

(57) **Abstract**

A method for manufacturing a lid assembly (1000), a lid assembly (1000) and a cell is provided. The method includes: a hole-forming step: providing a plate (4000) and forming a through-hole (4100) penetrating a first surface (112) and a second surface (113) of the plate (4000); a punching step: extruding an edge of the through-hole (4100) from the second surface (113) toward the first surface (112) to form a columnar protrusion (4200) including a columnar inner wall (4210), a columnar outer wall (4220), and an annular end surface (4240); a splitting preparation step: fitting a first die (8000a) over the columnar protrusion (4200) and abutting the first die (8000a) against the first surface (112); and a splitting step: using a second die (8000) to stamp, from the annular end surface (4240) toward the second surface (113), a portion of the columnar protrusion (4200) adjacent to the columnar inner wall (4210).

## Description

### BACKGROUND

### Technical Field

The present disclosure relates to the field of battery technology, and in particular to a method for manufacturing a lid assembly, a lid assembly, and a cell.

### Description of Related Art

In the development of battery technology, in addition to improving the performance of the cells, safety is likewise an issue that cannot be overlooked. Absent assurance of the safety of cells, the cells cannot be put into use. Accordingly, enhancing the safety performance of the cells constitutes a technical problem in the field of battery technology that urgently requires resolution.

### SUMMARY

In view of the foregoing, the present disclosure provides a method for manufacturing a lid assembly, a lid assembly, and a cell, so as to at least partially solve the problem of how to enhance the safety performance of the cell.

For the purposes described above, a first aspect of the present disclosure provides a method for manufacturing a lid assembly, including:

Hole-forming step: providing a plate and forming a through-hole on the plate, wherein the through-hole extends, in a first direction, through a first surface and a second surface of the plate, the first direction is a thickness direction of the plate;

Punching step: extruding, from the second surface toward the first surface, an edge of the through-hole so as to form a columnar protrusion protruding from the first surface, wherein the columnar protrusion includes a columnar inner wall, a columnar outer wall, and an annular end surface respectively connected to the columnar inner wall and the columnar outer wall;

Splitting preparation step: fitting an annular first die over an exterior of the columnar protrusion and bringing the first die into abutment with the first surface, wherein the first die is spaced apart from the columnar outer wall;

Splitting step: using a second die to stamp, from the annular end surface toward the second surface, a portion of the columnar protrusion adjacent to the columnar inner wall so as to form a second fixing portion, while a portion of the columnar protrusion adjacent to the columnar outer wall moves toward the first die to avoid interference with the second die and forms a first fixing portion.

Optionally, in the splitting preparation step, along the second direction that is perpendicular to the first direction, a minimum linear clearance distance between the first die and the columnar outer wall is L₁. On the same side of a centerline of the columnar protrusion, a linear clearance distance along the second direction between an inner edge and an outer edge of the annular end surface is L. A ratio of L₁ to L is greater than 0 and less than or equal to 0.06.

Optionally, an inner wall of the first die is disposed inclined, relative to the first direction, toward a root portion of the columnar protrusion, with an inclination angle a, where 0° < a ≤ 10°.

Optionally, an end surface of the first die is in abutment with the first surface, a first fillet is provided at a junction between the inner wall of the first die and the end surface, and a radius R of the first fillet satisfies 0 < R ≤ 2mm.

Optionally, on the same side of the centerline of the columnar protrusion, the linear clearance distance along the second direction between the inner edge and the outer edge of the annular end surface is L. Along the first direction, the second die has a maximum linear clearance distance L₂ in the second direction between an outer edge of a projection of the annular end surface and the outer edge of the annular end surface, and a ratio of L₂ to L is 0.5 to 0.6. The second direction is perpendicular to the first direction.

Optionally, the splitting step includes forming, during the stamping operation, a stepped portion at a junction between an inner wall of the first fixing portion and an inner wall of the second fixing portion.

Optionally, the splitting step further includes, when stamping the portion of the columnar protrusion proximate to the columnar inner wall, supporting a location of the second surface surrounding the columnar protrusion so as to form a groove on the second surface.

Optionally, in the punching step, a second fillet is formed between the columnar inner wall and the second surface.

After the punching step and before the splitting step, the method further includes: a piling preparation step in which a portion of an annular third die is fitted over an exterior of the columnar protrusion and is spaced from the columnar outer wall so as to define a space allowing for deformation of the columnar protrusion, and another portion of the third die abuts against the annular end surface; and a piling step in which the second die stamps the annular end surface toward the second surface to reduce a radius of the second fillet.

Optionally, the splitting step includes, when stamping the portion of the columnar protrusion adjacent to the columnar inner wall, forming a first anti-rotation structure on an inner surface of the first fixing portion.

Optionally, the first fixing portion includes a first end distal from the plate. The method for manufacturing the lid assembly further includes pressing the first end toward the second surface so as to form the first anti-rotation structure on the inner surface of the first fixing portion.

Optionally, the splitting step includes forming an anti-rotation groove on the stepped portion.

Optionally, the punching step includes punching an edge of the through-hole from the second surface toward the first surface at least twice, such that an aperture of the through-hole increases successively and the columnar protrusion protruding from the first surface is formed.

Optionally, the first fixing portion includes the first end that is away from the plate. The method for manufacturing the lid assembly further includes pressing the first end toward the second surface so as to bend the first end toward a centerline of the first fixing portion.

Optionally, the first fixing portion and the second fixing portion define a receiving space. The method for manufacturing the lid assembly further includes securing a terminal fitted with a sealing portion within the receiving space.

Based on the same inventive concept, according to a second aspect, the present disclosure provides a lid assembly, which is obtainable by the method for manufacturing the lid assembly as described in the first aspect. The lid assembly includes: a lid, the lid including a lid base at least partially formed from a plate and a first fixing portion, and a receiving space defined by a through-hole. The first fixing portion includes a first sub-portion extending along a first direction. The first sub-portion includes a first root portion and a second root portion disposed along a second direction. The first root portion is positioned closer to the receiving space than the second root portion. The first root portion is integrally formed with the lid base, and the second root portion is discontinuously arranged relative to the lid base and abutted against a first surface. The second direction is perpendicular to the first direction.

Optionally, on a side of a centerline of the receiving space, a minimum dimension, measured along the second direction, of an end portion of the first sub-portion that is remote from the lid base is L₄. A sum of dimensions, measured along the second direction, of the first root portion and the second root portion is L₃; and L₃ is greater than L₄.

Optionally, an outer wall of the first sub-portion is disposed inclined, relative to the first direction, toward the centerline of the receiving space.

Optionally, the first sub-portion satisfies at least one of the following conditions:

An inner wall of the first sub-portion is parallel to the first direction;

An inclination angle b of the outer wall of the first sub-portion satisfies 0° < b ≤ 10°.

Optionally, on a side of the centerline of the receiving space, a linear clearance distance, along the second direction, between an inner edge and an outer edge of the first root portion is L₅, and a ratio of L₅ to L₃ is greater than 0.65.

Optionally, the lid further includes a second fixing portion, the second fixing portion includes a second inner wall, and the second inner wall satisfies at least one of the following conditions:

The second inner wall is perpendicular to the first direction;

Along the first direction, a linear clearance distance between the second inner wall and the first surface is H₁, where 1mm ≤ H₁ ≤ 1.3mm.

Optionally, a thickness of the lid base is H₃; the lid base satisfies at least one of the following conditions:

The first fixing portion includes a second sub-portion that is integrally formed with the first sub-portion and extends toward the centerline of the receiving space along the second direction, a dimension of the second sub-portion along the first direction is H₂, and a ratio of H₂ to H₃ is 0.14 to 0.48;

The lid further includes a second fixing portion, a dimension of the second fixing portion along the first direction is H₄, and a ratio of H₄ to H₃ is 0.15 to 0.5.

Optionally, the lid further includes a second fixing portion. The first fixing portion includes a first inner wall, the second fixing portion includes a second inner wall, and the first inner wall, the second inner wall, and a stepped portion connecting the first inner wall and the second inner wall together define the receiving space. The stepped portion projects toward the first surface beyond the second inner wall.

Optionally, the second surface is provided with a groove surrounding the second fixing portion. Along the second direction, the groove extends to the second fixing portion.

Optionally, the stepped portion is connected to the first inner wall to form an inner connecting portion. Along the first direction, a projection of the inner connecting portion onto the second surface lies within the groove.

Optionally, a terminal and an insulating sealing structure are further included. The terminal and the insulating sealing structure are at least partially disposed within the receiving space, and the lid and the terminal are connected via the insulating sealing structure. The insulating sealing structure includes an upper insulating portion and a sealing portion.

Optionally, at least one of the first fixing portion, the terminal, and the stepped portion is provided with an anti-rotation structure.

The anti-rotation structure provided on the first fixing portion is a first anti-rotation structure, and the upper insulating portion is formed with a first insulating anti-rotation structure. One of the first anti-rotation structure and the first insulating anti-rotation structure is a recessed groove structure, and the other is a protrusion engaged within the groove structure.

The anti-rotation structure provided on the terminal is a second anti-rotation structure, and the upper insulating portion is formed with a second insulating anti-rotation structure. One of the second anti-rotation structure and the second insulating anti-rotation structure is a groove structure, and the other is a protrusion engaged within the groove structure.

The anti-rotation structure provided on the stepped portion is an anti-rotation groove, and the upper insulating portion is formed with a third insulating anti-rotation structure. The third insulating anti-rotation structure is engaged within the anti-rotation groove.

Based on the same inventive concept, the third aspect of the present disclosure provides a cell, including a housing, an electrode assembly, and a lid assembly as described in the second aspect. The lid assembly is connected to the housing, and the electrode assembly is disposed within a space formed by the lid assembly and the housing.

As can be seen from the above, the method for manufacturing the lid assembly, the lid assembly, and the cell provided in the present disclosure, through the hole-forming step, the punching step, and the splitting step, are able to construct the lid with the lid base, the first fixing portion, and the second fixing portion from a flat plate. Since the lid base, the first fixing portion, and the second fixing portion are integrally formed and connected, it is possible to improve the connection strength between the three and helps to reduce the risk of breakage at the junction between the first fixing portion and the lid base, and the junction between the second fixing portion and the lid base.

Meanwhile, when forming the first fixing portion, the first die fitted on the outside of the columnar protrusion is spaced apart from the columnar outer wall, which provides a sufficient space for deforming outward for the part of the columnar protrusion near the columnar outer wall. This allows a material in this part to move toward the first die during the splitting step, thereby effectively avoiding interference with the second die and allowing the second die to move smoothly along the first direction. Such configuration facilitates the first fixing portion and the second fixing portion to be formed according to a preset structure, and enables the formed first fixing portion to reliably fix the terminal, which helps to improve the connection reliability between the terminal and the lid, as well as the safety performance of the cell.

### BRIEF DESCRIPTION OF THE DRAWINGS

To more clearly illustrate the technical solutions in the present disclosure or related technologies, the accompanying drawings used in the description of the embodiments or related technologies will be briefly introduced below. Clearly, the drawings described below are merely embodiments of the present disclosure. For those skilled in the art, other drawings can be obtained based on these drawings without creative effort.
FIG. 1 is a partial cross-sectional view of a cell having a first structure in an embodiment of the present disclosure.
FIG. 2 is a partial top view of a lid assembly having a second structure in an embodiment of the present disclosure.
FIG. 3 is a cross-sectional view taken along line A-A in FIG. 2.
FIG. 4 is an enlarged view of a portion B in FIG. 3.
FIG. 5 is a flowchart illustrating a method of manufacturing a lid assembly in an embodiment of the present disclosure.
FIG. 6A is a partial cross-sectional view of a hole-forming step in a method of manufacturing a lid assembly having a third structure in an embodiment of the present disclosure.
FIG. 6B is a partial cross-sectional view of a first extrusion of a plate to form a columnar protrusion in a punching step of the method of manufacturing the lid assembly having the third structure in an embodiment of the present disclosure.
FIG. 6C is a partial cross-sectional view of a second extrusion of a plate to form a columnar protrusion in a punching step of the method of manufacturing the lid assembly having the third structure in an embodiment of the present disclosure.
FIG. 6D is a partial cross-sectional view of a piling preparation step in a method of manufacturing the lid assembly having the third structure in an embodiment of the present disclosure.
FIG. 6E is a partial cross-sectional view of a piling step in a method of manufacturing the lid assembly having the third structure in an embodiment of the present disclosure.
FIG. 6F is a partial cross-sectional view of a splitting preparation step in a method of manufacturing the lid assembly having the third structure in an embodiment of the present disclosure.
FIG. 6G is a partial cross-sectional view of a method of manufacturing the lid assembly having the third structure in an embodiment of the present disclosure after a first splitting step is completed.

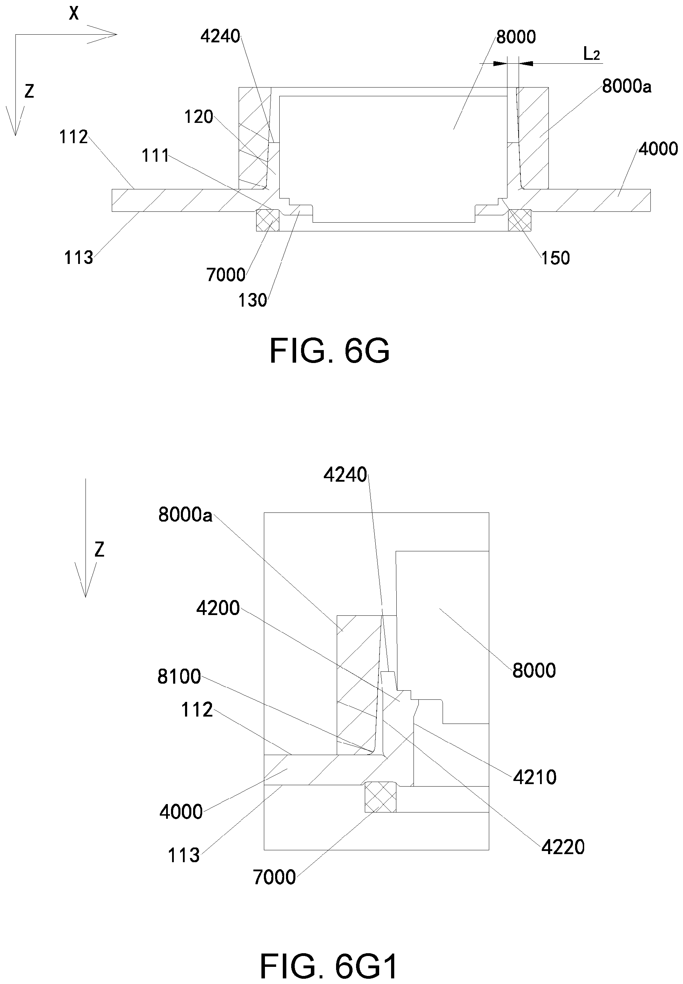

FIG. 6G1 is a partial cross-sectional view of a method of manufacturing the lid assembly having the third structure in an embodiment of the present disclosure during operation of a first splitting step.

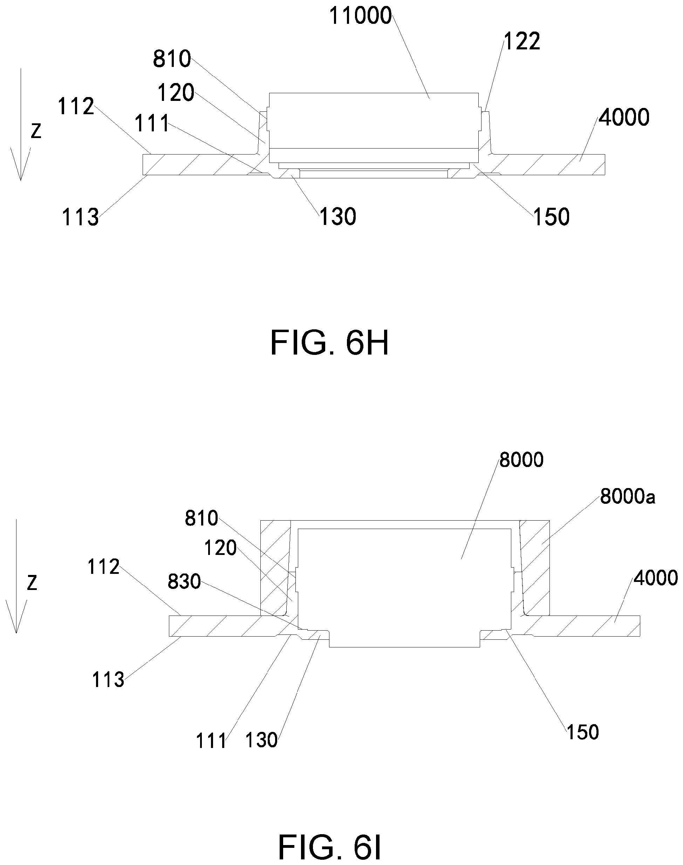

FIG. 6H is a partial cross-sectional view of forming a first anti-rotation structure in a method of manufacturing the lid assembly having the third structure in an embodiment of the present disclosure.
FIG. 6I is a partial cross-sectional view of a second splitting step in a method of manufacturing the lid assembly having the third structure in an embodiment of the present disclosure.

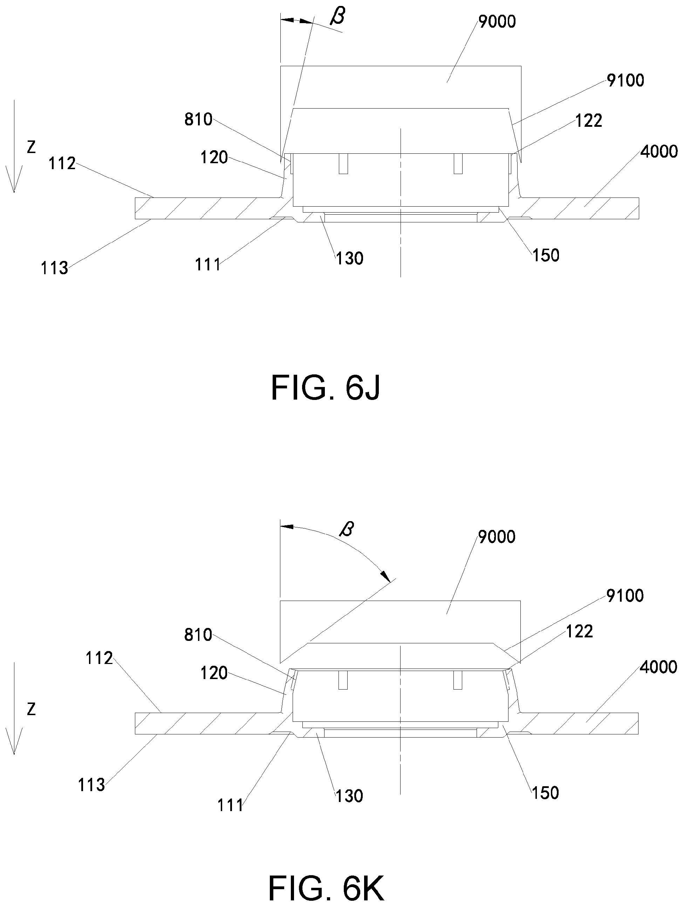

FIG. 6J is a partial cross-sectional view of a first pressing operation of a first end in a method of manufacturing the lid assembly having the third structure in an embodiment of the present disclosure.
FIG. 6K is a partial cross-sectional view of a second pressing operation of a first end in a method of manufacturing the lid assembly having the third structure in an embodiment of the present disclosure.

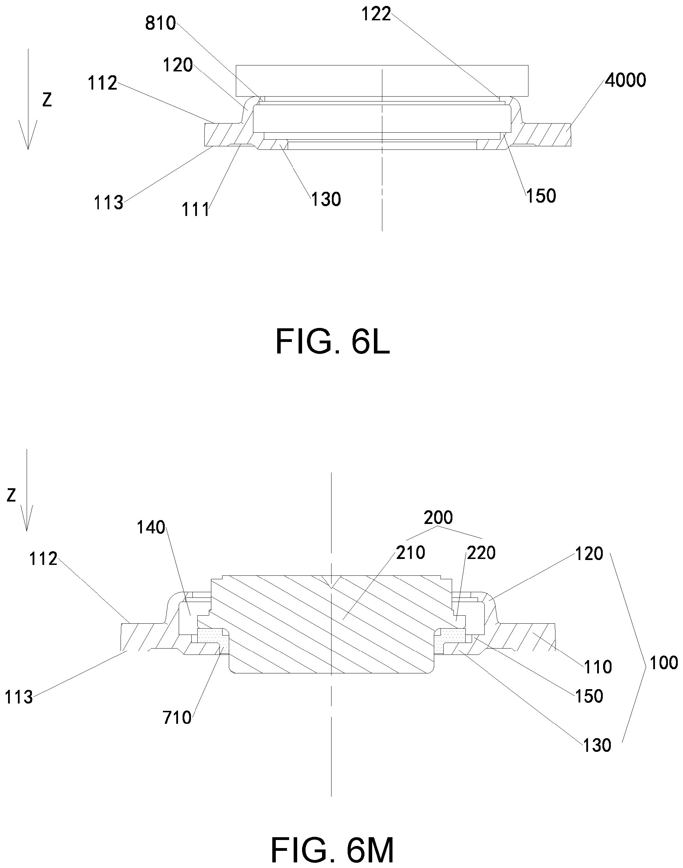

FIG. 6L is a partial cross-sectional view of a final pressing operation of a first end in a method of manufacturing the lid assembly having the third structure in an embodiment of the present disclosure.
FIG. 6M is a cross-sectional view of assembling a terminal on a lid in a method of manufacturing the lid assembly having the third structure in an embodiment of the present disclosure.

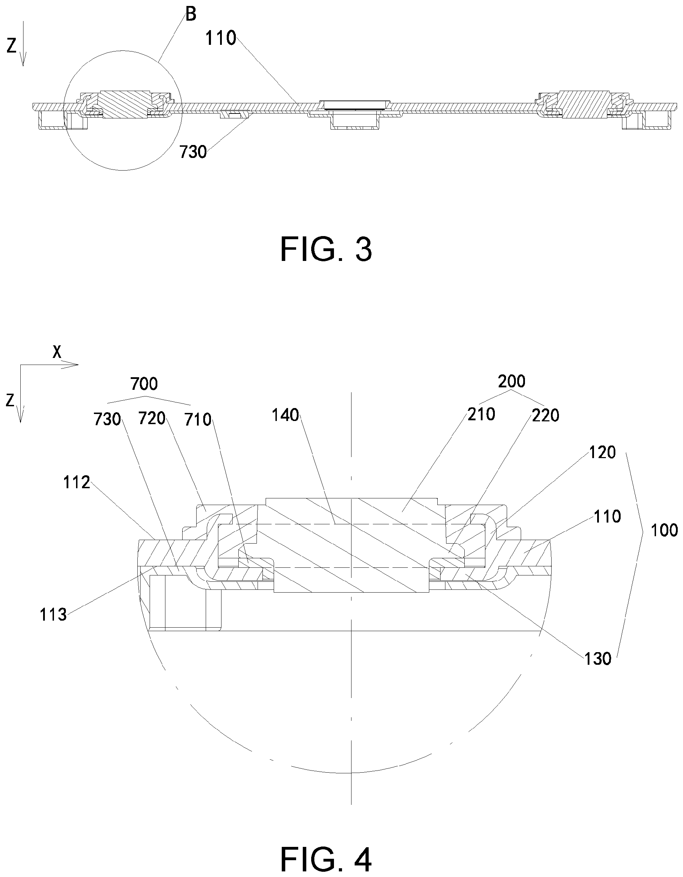

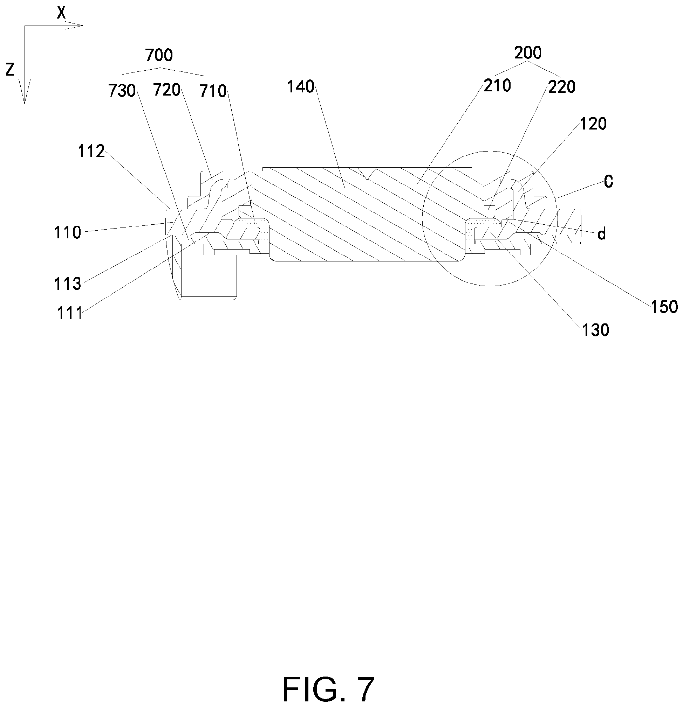

FIG. 7 is an enlarged view of a portion B in FIG. 3 of the lid assembly having the third structure in an embodiment of the present disclosure.

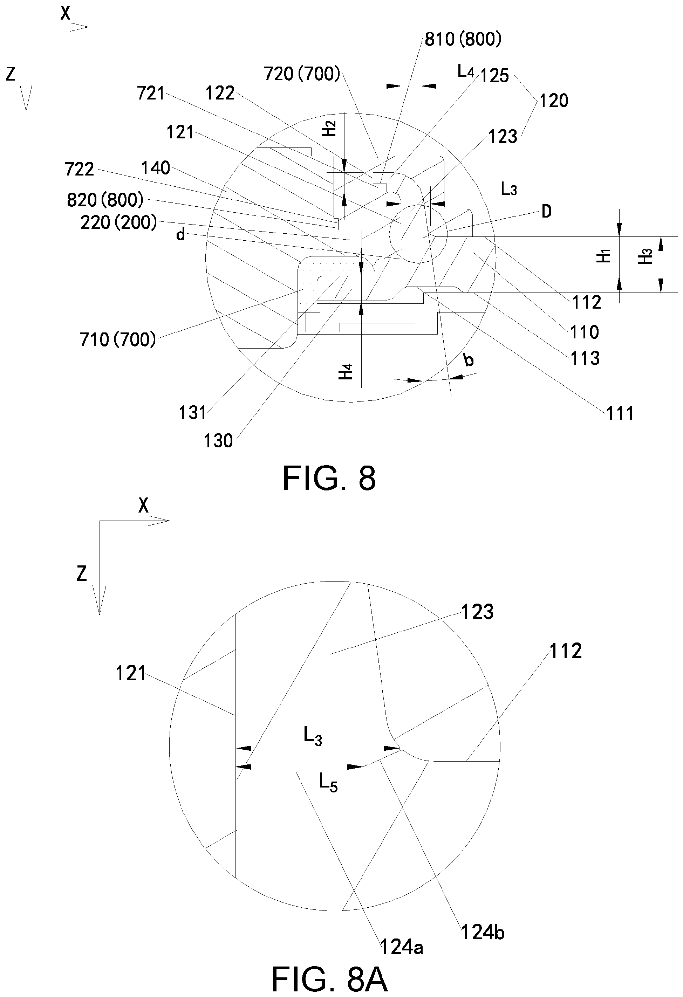

FIG. 8 is an enlarged view of a portion C in FIG. 7.
FIG. 8A is an enlarged view of a portion D in FIG. 8.

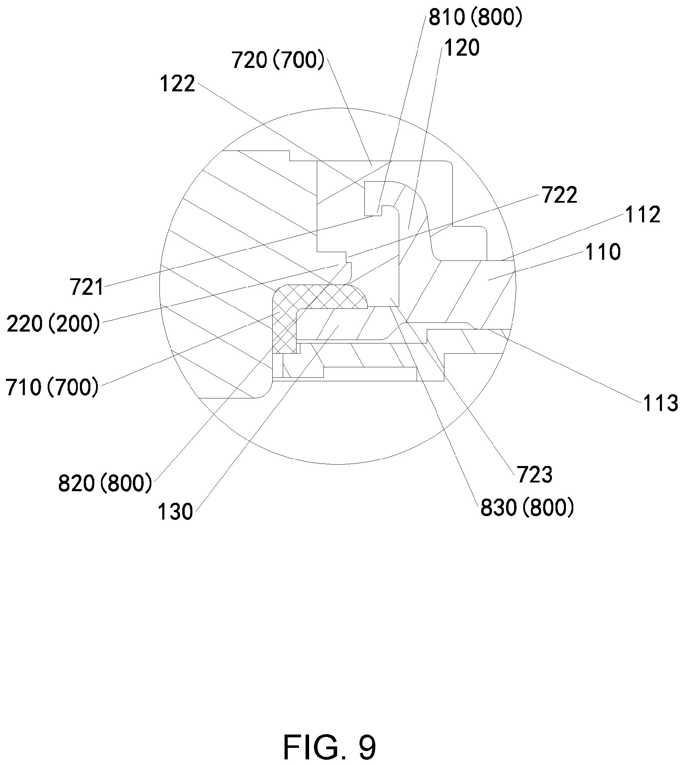

FIG. 9 is an enlarged view of a portion C in FIG. 7 of a lid assembly having a fourth structure in an embodiment of the present disclosure.

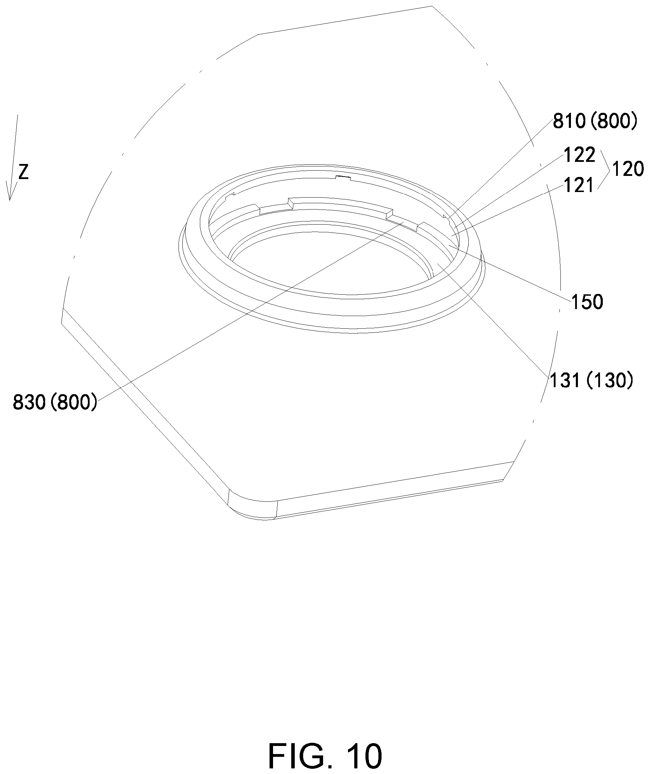

FIG. 10 is a schematic view of a lid of a lid assembly having a fifth structure in an embodiment of the present disclosure.

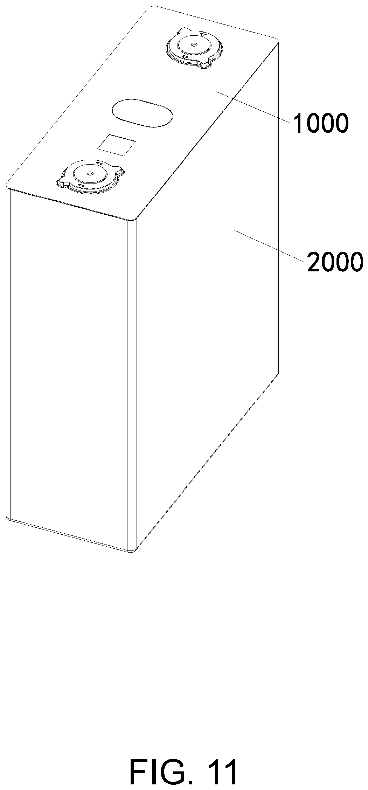

FIG. 11 is a schematic view of a cell in an embodiment of the present disclosure.

### DESCRIPTION OF THE EMBODIMENTS

To make the purpose, technical solution, and advantages of the present disclosure clearer, the present disclosure is further described in detail below with reference to specific embodiments and the accompanying drawings.

It should be noted that, unless otherwise specifically stated, the relative arrangement, numerical expressions, and values of the components described in these embodiments do not limit the scope of the present disclosure.

Furthermore, it should be understood that, for ease of description, the dimensions of the various parts shown in the accompanying drawings are not drawn to actual scale.

The following description of at least one exemplary embodiment is merely illustrative and is in no way intended to limit the present disclosure or its application or use.

It should be noted that, unless otherwise defined, the technical or scientific terms used in the embodiments of the present disclosure should have the ordinary meaning understood by one of ordinary skill in the art to which the present disclosure pertains. The terms "first," "second," and similar words used in the embodiments of the present disclosure do not indicate any order, quantity, or importance, but are merely used to distinguish different components. Words such as "comprising" or "including" mean that the element or object preceding the word encompasses the element or object listed following the word and its equivalents, without excluding other elements or objects. Words like "connect" or "link" are not limited to physical or mechanical connections, but can include electrical connections, whether direct or indirect. Terms like "up," "down," "left," and "right" are only used to indicate relative positional relationships; when the absolute position of the object being described changes, the relative positional relationship may also change accordingly.

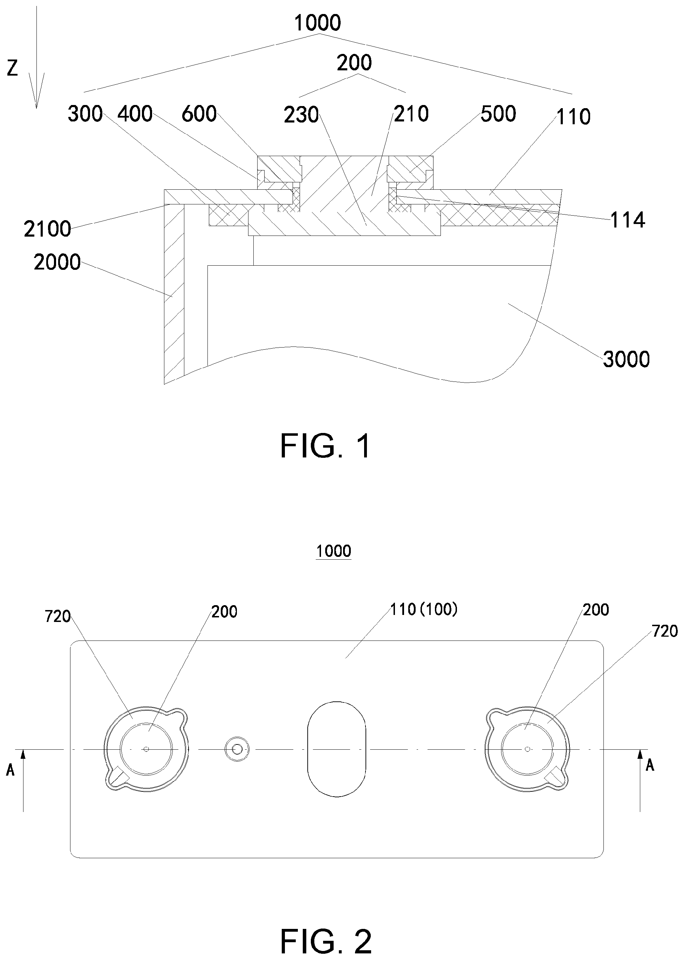

FIG. 1 shows a partial cross-sectional view of a cell with a first structure.

As shown in FIG. 1, in some embodiments, the cell includes a lid assembly 1000 and a housing 2000. The lid assembly 1000 includes a lid base 110, which has a mounting hole 114 extending through the lid base 110 along a thickness direction thereof (e.g., direction Z in FIG. 1). The lid base 110 is fitted to an opening end 2100 of the housing 2000, so that the lid base 110 and the housing 2000 together form a space for accommodating an electrode assembly 3000. A lower insulating member 300 is connected to a side of the lid base 110 close to the electrode assembly 3000, and an upper insulating member 400 is connected to a side of the lid base 110 away from the electrode assembly 3000. The lid assembly 1000 further includes a terminal 200, which is fitted with a sealing ring 600 and through which the lower insulating member 300, the lid base 110, and the upper insulating member 400 pass. One end of the terminal 200, away from electrode assembly 3000, extends out of the upper insulating member 400 and is riveted to a riveting block 500. The terminal 200 and the lid base 110 compress the sealing ring 600 to seal a space between the terminal 200 and the lid base 110 through the sealing ring 600, and to insulate a space between the terminal 200 and the lid base 110 through the upper insulating member 400 and the lower insulating member 300.

As can be seen from the foregoing, in this embodiment, in order to achieve an insulated and sealed connection between the terminal 200 and the lid base 110, a terminal body 210 and a terminal base plate 230 are connected together by friction welding and then assembled onto the lid base 110. The terminal body 210 and the riveting block 500 are connected in a sealed manner through riveting and welding processes to achieve a sealed connection between the terminal 200 and the lid base 110. The assembly process is relatively complex and the assembly efficiency is low. Furthermore, when the riveting block 500 is pulled by a battery plate, the terminal 200 is subjected to a Z-direction tension, which may easily cause a connection interface between the terminal base plate 230 and the terminal body 210 to become unstable, thereby affecting the performance of a cell.

To address the aforementioned issues, an embodiment of the present disclosure provides a lid assembly 1000 with other structures.

FIG. 2 is a partial top view of a lid assembly 1000 having a second structure. FIG. 3 is a cross-sectional view taken along line A-A in FIG. 2. FIG. 4 is an enlarged view of a portion B in FIG. 3.

As shown in FIG. 2 and FIG. 3, in some embodiments, the lid assembly 1000 includes a lid 100, the terminal 200, and an insulating sealing structure 700, with the lid 100 and the terminal 200 connected via the insulating sealing structure 700. Exemplarily, the terminal 200 may include a positive terminal and a negative terminal. The positive terminal is provided to be electrically connected to a positive tab (the positive tab is formed by a current collector extending outward from a positive electrode sheet of electrode assembly 3000) of the electrode assembly 3000 to form a positive electrode of the cell. The negative terminal is provided to be electrically connected to a negative tab (the negative tab is formed by a current collector extending outward from a negative electrode sheet of electrode assembly 3000) of the electrode assembly 3000 to form a negative electrode of the cell.

As shown in FIG. 3 and FIG. 4, the lid 100 includes the lid base 110, a first fixing portion 120, and a second fixing portion 130. The first fixing portion 120 and the second fixing portion 130 are arranged around the terminal 200. The lid base 110 includes a first surface 112 and a second surface 113 arranged opposite to each other along a first direction (e.g., direction Z in FIG. 4). The first fixing portion 120 extends from the first surface 112 in a direction away from the lid base 110 at least along the first direction. The second fixing portion 130 extends from the second surface 113 toward a centerline of the terminal 200 at least along a second direction (e.g., direction X in FIG. 4). The first fixing portion 120 and the second fixing portion 130 define a receiving space 140. The terminal 200 and the insulating sealing structure 700 are at least partially located in the receiving space 140. The first direction is a centerline direction of the terminal 200, and the second direction is perpendicular to the first direction.

For example, when the lid assembly 1000 is applied to a cell, the second surface 113 is adjacent to the electrode assembly 3000.

For example, the insulating sealing structure 700 includes a lower insulating portion 730 connected to a side of the lid 100 adjacent to the second surface 113.

For example, the first fixing portion 120, the second fixing portion 130, and the lid base 110 may be integrally formed and connected; or, the first fixing portion 120 and the second fixing portion 130 may be integrally formed and welded to the lid base 110.

It should be noted that the first fixing portion 120 extends from the first surface 112 in a direction away from the lid base 110 at least along the first direction, which does not mean that an end of the first fixing portion 120 adjacent to the lid base 110 is disposed on the first surface 112, but only means that the first fixing portion 120 extends out of the lid base 110 from the first surface 112, and the first fixing portion 120 may also be extended into a space between the first surface 112 and the second surface 113. Similarly, the fact that the second fixing portion 130 extends from the second surface 113 toward the centerline of the terminal 200 at least along the second direction does not mean that an end of the second fixing portion 130 near the lid base 110 is disposed on the second surface 113. The second fixing portion 130 may also be extended into a space between the first surface 112 and the second surface 113.

Comparing FIG. 1 and FIG. 4, it can be seen that in the structure shown in FIG. 1, a middle part of terminal 200 has a columnar structure, and a lower end thereof needs to be connected to the terminal base plate 230 with a large horizontal area. The terminal base plate 230 and the riveting block 500 cooperate vertically to clamp the upper insulating member 400, the sealing ring 600, the lid base 110, and the lower insulating member 300, thus forming a stable terminal assembly. However, because the terminal 200 needs to have the terminal base plate 230 and be connected to the riveting block 500, this results in a large amount of metal material used for the lid assembly 1000, higher material costs, and a larger overall weight of the lid assembly 1000.

In the structure shown in FIG. 4, the terminal 200 is roughly columnar in shape. The second fixing portion 130 is able to support the terminal 200, and the insulating sealing structure 700 allows the terminal 200 and the first fixing portion 120 to form a reliable connection. Compared to the structure shown in FIG. 1, the terminal base plate 230 and the riveting block 500 are omitted, thus reducing the amount of metal material used for the lid assembly 1000, which helps to reduce the assembly difficulty and material cost of the lid assembly 1000.

The applicant's research found that during the process of forming the first fixing portion 120 by die stamping, if the die and the material to be formed are too tightly fitted, the material to be formed will not have enough space to avoid interference with the die during the die stamping process, which will cause the moving die to get stuck. It will be difficult for the first fixing portion 120 to form a preset structure, and it will also be difficult for the first fixing portion 120 to reliably fix the terminal 200. This will result in low reliability of the connection between the terminal 200 and lid 100, which will also have an adverse impact on the safety performance of the cell.

To address the above issues, this embodiment provides a method for manufacturing the lid assembly 1000.

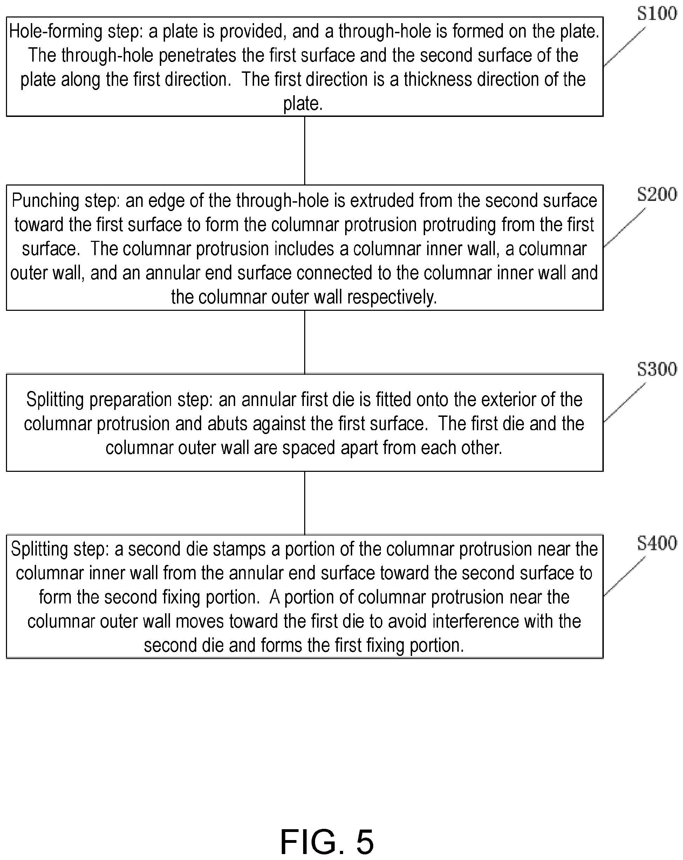

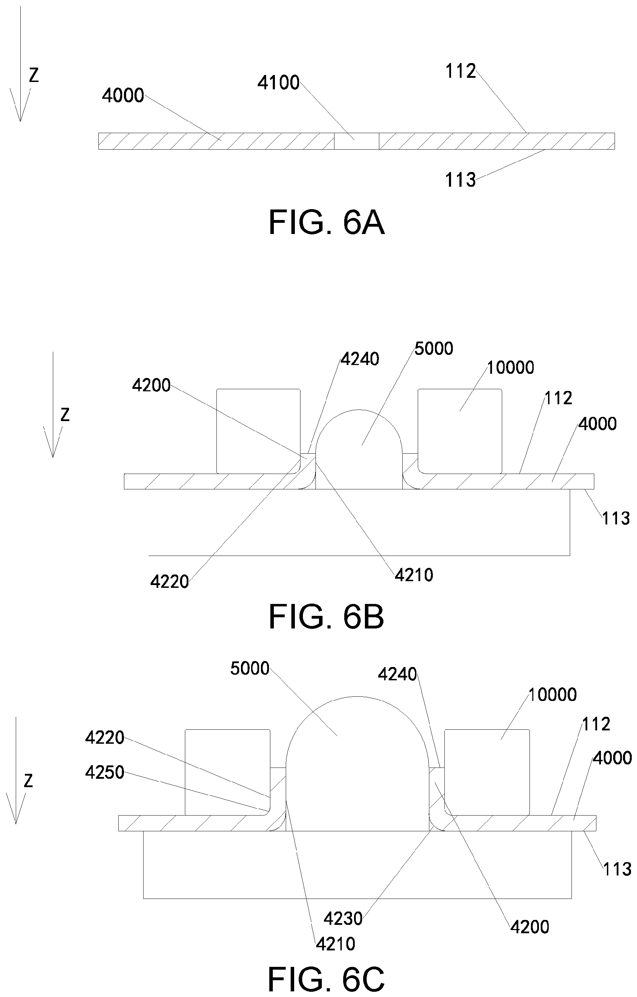

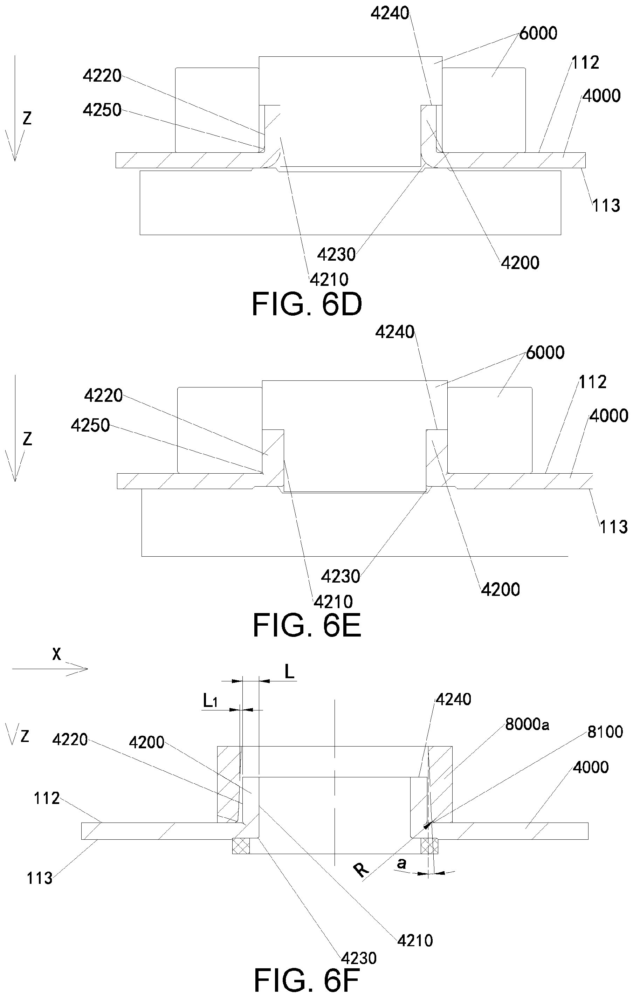

FIG. 5 is a flowchart illustrating a method of manufacturing the lid assembly 1000 having a third structure. FIG. 6A is a partial cross-sectional view of a hole-forming step in a method of manufacturing the lid assembly 1000 having the third structure. FIG. 6B is a partial cross-sectional view of a first extrusion of a plate 4000 to form a columnar protrusion 4200 in a punching step of the method of manufacturing the lid assembly 1000 having the third structure. FIG. 6C is a partial cross-sectional view of a second extrusion of the plate 4000 to form the columnar protrusion 4200 in the punching step of the method of manufacturing the lid assembly 1000 having the third structure. FIG. 6D is a partial cross-sectional view of a piling preparation step in a method of manufacturing the lid assembly 1000 having the third structure. FIG. 6E is a partial cross-sectional view of a piling step in a method of manufacturing the lid assembly 1000 having the third structure. FIG. 6F is a partial cross-sectional view of a splitting preparation step in a method of manufacturing the lid assembly 1000 having the third structure. FIG. 6G is a partial cross-sectional view of a method of manufacturing the lid assembly 1000 having the third structure after a first splitting step is completed. FIG. 6G1 is a partial cross-sectional view of a method of manufacturing the lid assembly 1000 having the third structure during operation of the first splitting step. FIG. 6H is a partial cross-sectional view of forming a first anti-rotation structure 810 in a method of manufacturing the lid assembly 1000 having the third structure. FIG. 6I is a partial cross-sectional view of a second splitting step in a method of manufacturing the lid assembly 1000 having the third structure. FIG. 6J is a partial cross-sectional view of a first pressing operation of a first end 122 in a method of manufacturing the lid assembly 1000 having the third structure. FIG. 6K is a partial cross-sectional view of a second pressing operation of the first end 122 in a method of manufacturing the lid assembly 1000 having the third structure. FIG. 6L is a partial cross-sectional view of a final pressing operation of the first end 122 in a method of manufacturing the lid assembly 1000 having the third structure. FIG. 6M is a cross-sectional view of assembling the terminal 200 on the lid 100 in a method of manufacturing the lid assembly 1000 having the third structure.

As shown in FIG. 5, the method of manufacturing the lid assembly1000 provided in this embodiment includes:
As shown in FIG. 6A, S100, the hole-forming step: the plate 4000 is provided, and a through-hole 4100 is formed on the plate 4000. The through-hole 4100 penetrates the first surface 112 and the second surface 113 of the plate 4000 along the first direction (e.g., direction Z in FIG. 6A). The first direction is a thickness direction of the plate 4000.

It should be noted that the first surface 112 and the second surface 113 are two surfaces of the plate 4000 that are disposed opposite to each other along the thickness direction thereof. At least a portion of the plate 4000 between the first surface 112 and the second surface 113 is provided to form the lid base 110.

The through-hole 4100 is formed on the plate 4000 by means of drilling, punching or milling. The through-hole 4100 is provided to form the receiving space 140.

As shown in FIG. 6A, FIG. 6B and FIG. 6C, S200, punching step: an edge of the through-hole 4100 is extruded from the second surface 113 toward the first surface 112 to form the columnar protrusion 4200 protruding from the first surface 112. The columnar protrusion 4200 includes a columnar inner wall 4210, a columnar outer wall 4220, and an annular end surface 4240 connected to the columnar inner wall 4210 and the columnar outer wall 4220 respectively.

It should be noted that both the columnar inner wall 4210 and the columnar outer wall 4220 are set around a centerline of the columnar protrusion 4200, and the annular end surface 4240 is an end surface of the columnar protrusion 4200 away from the second surface 113 along the thickness direction of the plate 4000.

A wall of the through-hole 4100 is extruded towards the first surface 112, such that the compressed portion of the plate 4000 is bulged towards the first surface 112, forming the columnar protrusion 4200 protruding from the first surface 112. At the same time, an aperture of the through-hole 4100 also increases.

The columnar protrusion 4200 is the structural basis for forming the first fixing portion 120 and the second fixing portion 130.

As shown in FIG. 6C and FIG. 6F, S300, a splitting preparation step is as follows: an annular first die 8000a is fitted onto the exterior of the columnar protrusion 4200 and abuts against the first surface 112. The first die 8000a and the columnar outer wall 4220 are spaced apart from each other.

As shown in FIG. 6G and FIG. 6G1, S400, a splitting step: a second die 8000 stamps a portion of the columnar protrusion 4200 near the columnar inner wall 4210 from the annular end surface 4240 toward the second surface 113 to form the second fixing portion 130. A portion of columnar protrusion 4200 near the columnar outer wall 4220 moves toward the first die 8000a to avoid interference with the second die 8000 and forms the first fixing portion 120.

It should be noted that both the first fixing portion 120 and the second fixing portion 130 are set around a centerline of the through-hole 4100.

When splitting the columnar protrusion 4200, the first die 8000a and the second die 8000 are used together. The first die 8000a is fitted onto the exterior of the columnar protrusion 4200 and abuts against the first surface 112, thereby positioning the second die 8000 with the columnar protrusion 4200. At least a portion of the second die 8000 slides within the first die 8000a along the first direction to stamp the portion of the columnar protrusion 4200 near the columnar inner wall 4210. The second die 8000 may be a columnar structure, with an outer diameter larger than an inner diameter of the columnar protrusion 4200 and smaller than an outer diameter of the columnar protrusion 4200.

As shown in FIG. 6G1 and FIG. 6G, after a bottom end of the second die 8000 abuts against the annular end surface 4240, pressure is applied to the portion of the annular end surface 4240 near the columnar inner wall 4210 to push the portion of the columnar protrusion 4200 near the columnar inner wall 4210 downward and change the shape thereof until the second fixing portion 130, which is at least partially an annular flat plate structure, is formed.

As shown in FIG. 6G1, although the portion of the columnar protrusion 4200 near the columnar outer wall 4220 is not directly stamped by the second die 8000, said portion is still subjected to a downward force due to the pressure exerted on the pressed portion. Since the first die 8000a and the columnar outer wall 4220 are spaced apart from each other, a space for the portion of the columnar protrusion 4200 near the columnar outer wall 4220 to be deformed outward may be provided. After said portion is deformed outward, this portion may avoid interference with the second die 8000, allowing the second die 8000 to move smoothly along the first direction, thus achieving high-quality stamping on the columnar protrusion 4200, allowing for the first fixing portion 120 and the second fixing portion 130 to be formed according to the preset structure.

In the method for manufacturing the lid assembly 1000 provided in this embodiment, through the hole-forming step, the punching step, and the splitting step, it is possible to construct the flat plate 4000 into the lid 100 having the lid base 110, the first fixing portion 120, and the second fixing portion 130. Since the lid base 110, the first fixing portion 120, and the second fixing portion 130 are integrally formed and connected, the connection strength between the three may be improved, and it is possible to reduce the risk of breakage at the junction between the first fixing portion 120 and the lid base 110, and at the junction between the second fixing portion 130 and the lid base 110.

Meanwhile, during the formation of the first fixing portion 120, the first die 8000a, which is fitted on the exterior of the columnar protrusion 4200, is spaced apart from the columnar outer wall 4220. Such configuration provides sufficient space for the portion of the columnar protrusion 4200 near the columnar outer wall 4220 to deform outward. Such configuration allows a material in this portion to move toward the first die 8000a during the splitting step, effectively avoiding interference with the second die 8000. Such configuration allows the second die 8000 to move smoothly along the first direction, which is beneficial for the first fixing portion 120 and the second fixing portion 130 to be formed according to the preset structure. As a result, the formed first fixing portion 120 may reliably fix the terminal 200, which helps to improve the connection reliability between the terminal 200 and lid 100, as well as the safety performance of the cell.

As shown in FIG. 6F, in some embodiments, during the splitting preparation step, along the second direction (i.e., the direction X in FIG. 6F), a minimum linear clearance distance between the first die 8000a and the columnar outer wall 4220 is L₁, and the second direction is perpendicular to the first direction. On the same side of the centerline of the columnar protrusion 4200, a linear clearance distance between an inner edge and an outer edge of the annular end surface 4240 along the second direction is L. A ratio of L₁ to L is greater than 0 and less than or equal to 0.06.

It should be noted that when at least one of the columnar outer wall 4220 and an inner wall (i.e., a surface of the first die 8000a facing the columnar protrusion 4200) of the first die 8000a is inclined relative to the first direction, the linear clearance distances between each region of the columnar outer wall 4220 and an inner wall of the first die 8000a along the first direction are not the same, and L₁ is a minimum value among them.

For example, the ratio of L₁ to L may be 0.01, 0.015, 0.02, 0.025, 0.03, 0.035, 0.04, 0.045, 0.05, 0.055 or 0.06.

If the ratio of L₁ to L is excessively large, a clearance between the first die 8000a and the second die 8000 in the second direction becomes excessive. When the second die 8000 stamps the columnar protrusion 4200, the portion configured to form the first fixing portion 120 may undergo uncontrolled deformation within the excessively large space, thereby causing issues such as excessive bending of the first fixing portion 120. Conversely, if the ratio of L₁ to L is excessively small, the clearance between the first die 8000a and the second die 8000 in the second direction is insufficient, and the aforementioned issue of impeded movement of the second die 8000 may still occur.

To avoid the foregoing issues, in this embodiment the ratio of L₁ to L is set to be greater than 0 and less than or equal to 0.06, such that the portion of the columnar protrusion 4200 proximate to the columnar outer wall 4220 may deform within an appropriate spatial allowance, thereby avoiding interference with the second die 8000 while ensuring that the first fixing portion 120 is formed in accordance with the preset structure.

As shown in FIG. 6F, in some embodiments, the inner wall of the first die 8000a is disposed to be inclined, with respect to the first direction, toward a root portion of the columnar protrusion 4200, with the inclination angle a such that 0° < a ≤ 10°.

By way of example, and without limitation, the inclination angle a may be 0.5°, 1°, 1.5°, 2°, 2.5°, 3°, 3.5°, 4°, 4.5°, 5°, 5.5°, 6°, 6.5°, 7°, 7.5°, 8°, 8.5°, 9°, 9.5°, or 10°.

If the inclination angle a is excessively large, it may result in an insufficient thickness at the top of the first fixing portion 120 after molding, thereby reducing the structural strength at the top of the first fixing portion 120. In the event that a fracture occurs at the top of the first fixing portion 120, the connection reliability between the terminal 200 and the lid 100 may be adversely affected.

To avoid the aforementioned issues, in this embodiment the inclination angle a is designed such that 0° < a ≤ 10°, thereby ensuring both that, after molding, a root portion of the first fixing portion 120 has a relatively large thickness and that the top thereof has an adequately sufficient thickness, so that the first fixing portion 120 as a whole possesses a high structural strength.

In addition, configuring the inner wall of the first die 8000a to be inclined facilitates separation of the first die 8000a from the molded first fixing portion 120, thereby facilitating demolding.

As shown in FIG. 6F, in some embodiments, an end surface of the first die 8000a is in abutment with the first surface 112. A first fillet 8100 is formed at the junction between the inner wall of the first die 8000a and the end surface, and a radius R of the first fillet 8100 is greater than 0 and not greater than 2mm.

For example, R may be 0.3mm, 0.5mm, 0.8mm, 1mm, 1.3mm, 1.5mm, 1.8mm or 2mm.

The problems caused by an excessively large radius R are similar to those caused by an excessively large parameter L₁, and will not be repeated here.

In the present embodiment, the radius R is designed to satisfy 0 < R ≤ 2mm, which allows the root portion of the columnar protrusion 4200 to deform within an appropriate space so as to form, in accordance with the preset structure, the first fixing portion 120, thereby improving the structural strength and connection reliability at the junction between the first fixing portion 120 and the lid base 110. Meanwhile, the first fillet 8100 further enables an arcuate transition between an outer wall of the first fixing portion 120 and the first surface 112, thereby avoiding stress concentration at the root portion of the first fixing portion 120 and further reducing the risk of cracking at the junction between the first fixing portion 120 and the lid base 110.

As shown in FIG. 6G and FIG. 6F, in some embodiments, L₂ denotes a maximum linear clearance distance, measured along the second direction, between an outer edge of a projection (hereinafter, the "projection of the second die 8000") onto the annular end surface 4240 along the first direction of the second die 8000 and an outer edge of the annular end surface 4240. A ratio of L₂ to L is from 0.5 to 0.6. The second direction is perpendicular to the first direction.

It should be noted that the outer edge of the projection of the second die 8000 may be circular, or a protruding protrusion or an inwardly recessed groove may be provided in the circular part. Since the outer edge of the annular end surface 4240 is circular, the linear clearance distances along the second direction between different regions of the outer edge of the projection of the second die 8000 and the outer edge of the annular end surface 4240 along the circumference of the annular end surface 4240 are not the same, and L₂ is a maximum value among them.

For example, the ratio of L₂ to L may be 0.5, 0.51, 0.52, 0.53, 0.54, 0.55, 0.56, 0.57, 0.58, 0.59 or 0.6.

It may be understood that a portion between the outer edge of the projection of the second die 8000 and the outer edge of the annular end surface 4240 is not directly stamped by the second die 8000. The columnar protrusion 4200 corresponding to this portion is used to form the first fixing portion 120. If the ratio of L₂ to L is excessively large, a thickness of a material used to form the first fixing portion 120 becomes excessive. During the splitting step, this portion of material is not readily deformable outward and therefore cannot adequately avoid interference with the second die 8000, which may result in difficulty in forming the first fixing portion 120. Conversely, if the ratio of L₂ to L is too small, the thickness of the material used to form the first fixing portion 120 is insufficient, and the resulting first fixing portion 120, due to inadequate material, exhibits a reduced structural strength and cannot reliably secure the terminal 200.

To avoid the foregoing issues, in the present embodiment, the ratio of L₂ to L is designed to be 0.5 to 0.6. During the splitting step, this ensures that a relatively sufficient amount of material is reserved for the first fixing portion 120, which helps enhance the structural strength of the first fixing portion 120, and further ensures that the material used to form the first fixing portion 120 can effectively avoid interference with the second die 8000, thereby facilitating the smooth forming of the first fixing portion 120.

As shown in FIG. 6G, in some embodiments, in S400, the splitting step includes:

During the stamping process, a stepped portion 150 is formed at the junction between an inner wall of the first fixing portion 120 and an inner wall of the second fixing portion 130.

It should be noted that the stepped portion 150 is provided continuously or discontinuously around the centerline of the through hole 4100.

As shown in FIG. 6G, a groove structure recessed inward is formed at a lower end of the second die 8000. This groove structure is configured to plastically form a portion of the columnar protrusion 4200 that is displaced under compressive loading, thereby forming the stepped portion 150.

By way of exemplary explanation with reference to the structure and orientation shown in FIG. 6G, if the stepped portion 150 is not formed between the inner wall of the first fixing portion 120 and the inner wall of the second fixing portion 130, the inner walls of the first fixing portion 120 and the second fixing portion 130 would intersect and form a right-angled structure. By contrast, when the stepped portion 150 is formed between the inner walls of the first fixing portion 120 and the second fixing portion 130, relative to the right-angled structure, sufficient material at the junction between the first fixing portion 120 and the second fixing portion 130 may be ensured, which may effectively prevent cracking among the first fixing portion 120, the second fixing portion 130, and the lid base 110, thereby contributing to improved connection reliability among these three components.

As shown in FIG. 6G, in some embodiments, in S400, the splitting step includes:

While stamping the portion of the columnar protrusion 4200 proximate to the columnar inner wall 4210, supporting a location of the second surface 113 surrounding the columnar protrusion 4200 so as to form a groove 111 on the second surface 113.

Prior to performing the splitting step, an annular extrusion die 7000 may be disposed on the second surface 113, with a centerline of the annular extrusion die 7000 coincident with the centerline of the columnar protrusion 4200. By supporting, via the annular extrusion die 7000, the location of the second surface 113 surrounding the columnar protrusion 4200, during a process in which the second die 8000 downwardly extrudes the columnar protrusion 4200 via the annular end surface 4240, the annular extrusion die 7000, at a bottom of the plate 4000, utilizes a downward pressing force applied to the plate 4000 to perform reverse extrusion on the second surface 113. A portion of contact between the annular extrusion die 7000 and the second surface 113 form the recessed groove 111, and a material originally located at the groove 111 is extruded toward a first junction (i.e., a junction between the first fixing portion 120 and the lid base 110), a second junction (i.e., a junction between the second fixing portion 130 and the lid base 110), and the stepped portion 150, such that the material at the foregoing three locations is relatively sufficient and the structural strength is increased.

It is to be noted that, when the formed second fixing portion 130 protrudes from the second surface 113, the annular extrusion die 7000 may further limit an outer diameter of the second fixing portion 130, such that the second fixing portion 130 protruding from the second surface 113 is entirely located inward of the columnar outer wall 4220 of the columnar protrusion 4200.

As shown in FIG. FIG. 6C, FIG. 6D, and FIG. 6E, in some embodiments, during the punching step, a second fillet 4230 is formed between the columnar inner wall 4210 and the second surface 113, and a third fillet 4250 is formed between the columnar outer wall 4220 and the first surface 112.

After the punching step and prior to the splitting step, the method further includes:

S500, piling preparation step: fitting a portion of a third die 6000 over the exterior of the columnar protrusion 4200, the third die 6000 being spaced from the columnar outer wall 4220 so as to define a space for deformation of the columnar protrusion 4200. Another portion of the third die 6000 abuts against the annular end surface 4240. More preferably, the annular extrusion die 7000 may be disposed on the second face 113 (as in the splitting step S400 described above).

S600, piling step: using the third die 6000 to stamp the annular end surface 4240 toward the second face 113 so as to reduce a radius of the second fillet 4230.

It should be noted that a thickness of the columnar protrusion 4200 refers to a dimension of the columnar protrusion 4200 along the second direction on a side of the centerline thereof.

It is understood that, after the columnar protrusion 4200 is formed, a natural bend is produced between the second face 113 and the columnar inner wall 4210 of the columnar protrusion 4200, thereby forming the second fillet 4230. However, the applicant has found that, when the radius of the second fillet 4230 is relatively large, there is relatively less material at the second fillet 4230, which may result in a material deficiency in the second fixing portion 130 during subsequent formation of the second fixing portion 130.

In order to avoid the foregoing problem, in this embodiment, the annular end surface 4240 may be extruded by the third die 6000 so as to cause the material to fill the second fillet 4230, thereby correspondingly reducing the radius of the second fillet 4230. This is advantageous, on the one hand, for improving the structural strength of the second fixing portion 130, and, on the other hand, for increasing the joint strength between the plate 4000 and the second fixing portion 130, thereby preventing fracture at the junction.

In the foregoing extrusion process, the outer diameter of the columnar protrusion 4200 exhibits a tendency to increase. If, during the piling preparation step, the third die 6000 is in close abutment with the columnar outer wall 4220, the third die 6000 would constrain the outer diameter of the columnar protrusion 4200. In such a case, the columnar protrusion 4200 could only undergo outward expansion and deformation within a portion of a gap between the third die 6000 and the first surface 112, which may impede the movement of the third die 6000 and render it difficult to reduce the radius of the second fillet 4230 to a predetermined dimension.

To avoid the foregoing, in this embodiment, the third die 6000 and the columnar outer wall 4220 are disposed with a spacing therebetween to define a space for deformation of the columnar protrusion 4200. In this manner, when the columnar protrusion 4200 is subjected to extrusion by the third die 6000, the columnar protrusion 4200 may expand the outer diameter thereof more uniformly in a radial outward direction to relieve the extrusion pressure, thereby effectively reducing the risk of deformation occurring in a portion of the gap between the third die 6000 and the first surface 112. This ensures that the third die 6000 may smoothly perform the piling of the columnar protrusion 4200 so as to reduce the radius of the second fillet 4230 to the predetermined dimension.

Concurrently, to avoid uncontrolled deformation of the second surface 113 and the columnar inner wall 4210 when the annular end surface 4240 is being extruded, a die configured to support the second surface 113 and to fit against the columnar inner wall 4210 may be provided during the extrusion process. A right-angle transition is formed between a surface of the die that mates with the columnar inner wall 4210 and the surface that supports the second surface 113. This arrangement prevents changes in the inner diameter of the columnar protrusion 4200 and also shapes the material filling the second fillet 4230 so as to reduce the radius of the second fillet 4230.

As shown in FIG. 6I, in some embodiments, in S400, the splitting step includes:

Forming an anti-rotation groove 830 on the stepped portion 150.

Within the groove structure of the second die 8000 that is configured to form the stepped portion 150, a protruding structure may be provided in selected regions. When the second die 8000 presses the portion of the columnar protrusion 4200 proximate to the columnar inner wall 4210, the protruding structure within the groove structure may press a partial region of the stepped portion 150, causing the pressed material to contract or to move downward, thereby forming the recessed anti-rotation groove 830 in the partial region of the stepped portion 150.

As shown in FIG. 6F and FIG. 6I, in some embodiments, in S400, the splitting step includes:

When stamping the portion of the columnar protrusion 4200 proximate to the columnar inner wall 4210, forming the first anti-rotation structure 810 on an inner surface of the first fixing portion 120.

FIG. 6I illustrates, by way of example, a case in which the first anti-rotation structure 810 is a groove structure. A protruding structure may additionally be provided on a circumferential sidewall of the second die 8000. When the second die 8000 compresses the portion of the columnar protrusion 4200 proximate to the columnar inner wall 4210, the structure protruding from the circumferential sidewall of the second die 8000 may press a portion of the first fixing portion 120 that is otherwise uncompressed, whereby the pressed material contracts or shifts downward so as to form, on the inner surface of the first fixing portion 120, a groove structure serving as the first anti-rotation structure 810.

In the present embodiment, the second fixing portion 130, the first fixing portion 120, the stepped portion 150, the groove 111, the first anti-rotation structure 810, and the anti-rotation groove 830 may be completed simultaneously, thereby simplifying the manufacturing process of the lid 100, reducing manufacturing costs, and improving production efficiency.

It is of course possible, in addition to the foregoing manner of forming the first anti-rotation structure 810, to form the first fixing portion 120 and the first anti-rotation structure 810 in separate steps.

Specifically, as shown in FIG. 6G and FIG. 6H, in some embodiments, the first fixing portion 120 includes the first end 122 distal from the plate 4000. The method for manufacturing the lid assembly 1000 further includes:

Pressing the first end 122 toward the second surface 113 to form the first anti-rotation structure 810 on the inner surface of the first fixing portion 120.

As shown in FIG. 6G, when the first fixing portion 120 is formed, the inner surface of the first fixing portion 120 may be a columnar surface. As shown in FIG. 6H, subsequently, the first fixing portion 120 is pressed by an anti-rotation forming die 11000, such that a circumferential surface of a columnar body of the anti-rotation forming die 11000 conforms to the inner surface of the first fixing portion 120. A protruding structure is formed on the circumferential surface of the columnar body and is provided to press the first end 122, thereby forming, on the inner surface of the first fixing portion 120, a groove structure serving as the first anti-rotation structure 810.

It should be noted that, when the first anti-rotation structure 810 is a protrusion, a die may press only a partial region of the first end 122, and the unpressed portion forms a protrusion serving as the first anti-rotation structure 810.

As shown in FIG. 6A, FIG. 6B, and FIG. 6C, in some embodiments, in S200, the punching step includes:

Punching the edge of the through-hole 4100 at least twice in a direction from the second surface 113 toward the first surface 112, so that the aperture of the through-hole 4100 is progressively enlarged and the columnar protrusion 4200 protruding from the first surface 112 is formed.

Specifically, as shown in FIG. 6B, an expansion die 5000 having an outer diameter slightly greater than the current aperture of the through-hole 4100 is first inserted into the through-hole 4100 from the second surface 113 to extrude the wall of the through-hole 4100, thereby causing the compressed portion of the plate 4000 to bulge toward the first surface 112. At the same time, the aperture of the through-hole 4100 is enlarged under the action of the expansion die 5000.

While the expansion die 5000 extrude the plate 4000, an annular limiting die 10000 may be disposed on the first surface 112 around the through-hole 4100. The annular limiting die 10000 may limit an outer edge of the portion bulging toward the first surface 112, preventing that portion from bending outward.

As shown in FIG. 6C, the expansion die 5000 having a larger outer diameter is inserted from the second surface 113 into the once-expanded through-hole 4100 to again extrude the wall of the through-hole 4100, thereby causing the compressed portion of the plate 4000 to continue bulging toward the first surface 112. At the same time, the outer diameter of the bulging portion, as well as the aperture of the through-hole 4100, is further increased.

The expansion die 5000 with progressively increasing outer diameter may be employed to repeat the foregoing operations multiple times until the bulging portion forms the columnar protrusion 4200 whose outer diameter and inner diameter both meet preset dimensions. The columnar protrusion 4200 extends, along the thickness direction of the plate 4000, from the plate 4000 in a direction away from the first surface 112.

As shown in FIG. 6J, FIG. 6K, and FIG. 6L, in some embodiments, the first fixing portion 120 includes the first end 122 that is remote from the plate 4000. The method of manufacturing the lid assembly 1000 further includes:

Pressing the first end 122 toward the second surface 113 so as to bend the first end 122 toward a centerline of the first fixing portion 120.

As shown in FIG. 6J, for the columnar first fixing portion 120, the first end 122 is initially pressed by a bending die 9000 through a bending operation. The bending die 9000 includes a conical surface 9100, which, during a first pressing operation, forms a relatively small angle β with a vertical direction, thereby causing the vertical first end 122 to incline inward toward the centerline of the first fixing portion 120 under the pressing action of the conical surface 9100.

As shown in FIG. 6K, for the first fixing portion 120 after the first pressing operation, the bending die 9000 having the conical surface 9100 with the greater angle β may be used to continue pressing the first end 122, thereby causing the first end 122 to further incline inward under the pressing action of the conical surface 9100.

After multiple such pressing operations, as shown in FIG. 6L, a plate-shaped die may finally be used to press the first fixing portion 120 so as to bend a portion of the first fixing portion 120 proximate to the first end 122 toward the centerline of the first fixing portion 120.

As shown in FIG. 6M, in some embodiments, the first fixing portion 120 and the second fixing portion 130 define the receiving space 140. The method for manufacturing the lid assembly 1000 further includes:

Securing the terminal 200 fitted with a sealing portion 710 within the receiving space 140.

After the lid 100 is molded, the terminal 200 fitted with the sealing portion 710 may be inserted into the receiving space 140, and the second fixing portion 130 provides a limiting function for a portion of the structure of the terminal 200 to prevent the terminal 200 from being withdrawn from the receiving space 140.

Based on the same inventive concept and in conjunction with the foregoing descriptions of the methods for manufacturing the lid assembly 1000 in the respective embodiments, the present embodiment provides the lid assembly 1000 that achieves the corresponding technical effects of the foregoing embodiments, and details thereof are not repeated herein.

FIG. 7 is an enlarged view of a portion B in FIG. 3 of the lid assembly 1000 having the third structure. FIG. 8 is an enlarged view of a portion C in FIG. 7. FIG. 8A is an enlarged view of a portion D in FIG. 8.

As shown in FIG. 6A, FIG. 7, FIG. 8, and FIG. 8A, the lid assembly 1000 provided in the present embodiment is formed by the manufacturing method for the lid assembly 1000 described in the foregoing embodiments. The lid assembly 1000 includes the lid 100. The lid 100 includes the lid base 110 and the first fixing portion 120, which are formed at least in part from the plate 4000, and the receiving space 140 defined by the through-hole 4100. In the splitting step, when the columnar protrusion 4200 is subjected to a downward stamping by the second die 8000 (i.e., in a direction from the annular end surface 4240 toward the second surface 113), the material of the columnar protrusion 4200 flows downward, and the third fillet 4250, along with the material flow, forms a stacked-material region, namely an intermittent structure. Upon completion of the stamping, a first root portion 124a (continuous structure) and a second root portion 124b (stacked-material region, intermittent structure) of a first sub-portion 123 are respectively formed.

The first fixing portion 120 includes the first sub-portion 123 extending along the first direction (e.g., the direction Z in FIG. 7). The first sub-portion 123 includes the first root portion 124a and the second root portion 124b arranged along the second direction (e.g., the direction X in FIG. 7). The first root portion 124a is closer to the receiving space 140 than the second root portion 124b. The first root portion 124a is integrally formed with and connected to the lid base 110. In some instances, sufficient piling in the preceding piling step may render the second root portion 124b continuous with the lid base 110. In other instances, excessive piling in the preceding piling step tends to make demolding difficult; therefore, the amount of piling is controlled such that the second root portion 124b forms an intermittent structure relative to the lid base 110 and abuts against the first surface 112. In this case, the dimensions of the first root portion 124a should be ensured to guarantee the strength of the first fixing portion 120. The second direction is perpendicular to the first direction.

It should be noted that the first sub-portion 123 is a portion of the first fixing portion 120 that extends in the first direction; that is, a portion of the first fixing portion 120 that is not bent in FIG. 6L.

Upon completion of the stamping operation, the first root portion 124a is closer to the receiving space 140; that is, the first root portion 124a is close to an inner wall of the first sub-portion 123, and the second root portion 124b is close to an outer wall of the first sub-portion 123.

With reference to FIG. 7, FIG. 8, and FIG. 8A, in some embodiments, on a side of a centerline of the receiving space 140, the dimension along the second direction of an end portion of the first sub-portion 123 that is away from the lid base 110 is L₄. A sum of the dimensions along the second direction of the first root portion 124a and the second root portion 124b is L₃; and L₃ > L₄.

It will be appreciated that, because the first root portion 124a is integrally formed with and connected to the lid base 110, an effective connection may be established therebetween. By contrast, the second root portion 124b is provided discontinuously with respect to the lid base 110, and therefore an effective connection cannot be established therebetween. Accordingly, only by ensuring that the first root portion 124a has a sufficiently large thickness (i.e., its dimension, on a side of the centerline of the receiving space 140, along the second direction) can it be ensured that the first fixing portion 120 may achieve a reliable connection with the lid base 110.

Since a thickness of the first root portion 124a is at most equal to L₄, in the present embodiment, L₃ is designed to be greater than L₄, namely in consideration of a thickness of the second root portion 124b, so as to ensure that, even in the presence of the second root portion 124b, the first root portion 124a may have a sufficiently large thickness, thereby ensuring a high structural strength and a connection reliability between the first fixing portion 120 and the lid base 110.

As shown in FIG. 8 and FIG. 8A, in some embodiments, the outer wall of the first sub-portion 123 is inclined, relative to the first direction, toward the centerline of the receiving space 140.

In view of the foregoing, the inner wall of the first die 8000a is arranged at an inclination; therefore, during the process of forming the first fixing portion 120 by means of the first die 8000a, the outer wall of the first fixing portion 120 is conformally shaped to have the same structure as the inner wall of the first die 8000a; that is, the outer wall of the first sub-portion 123 is arranged at an inclination.

As shown in FIG. 8, in some embodiments, the inner wall of the first sub-portion 123 is parallel to the first direction.

In conjunction with the foregoing, if the inner wall of the first sub-portion 123 were designed to be inclined, the inner wall might impede the movement of the second die 8000 along the first direction during the splitting step, causing inconvenience.

To avoid the foregoing problem, in the present embodiment, the inner wall of the first sub-portion 123 is designed to be parallel to the first direction, thereby ensuring that the second die 8000 is able to move smoothly along the first direction during the splitting step.

As shown in FIG. 8, in some embodiments, the inclination angle b of the outer wall of the first sub-portion 123 satisfies 0° < b ≤ 10°.

In view of the foregoing, the outer wall of the first sub-portion 123 conforms to the inner wall of the first die 8000a, and therefore their inclination angles are similar.

It should be noted that, after the first die 8000a is separated from the first fixing portion 120, the outer wall of the first sub-portion 123 may undergo springback. Consequently, the inclination angle of the outer wall of the first sub-portion 123 may differ from the inclination angle of the inner wall of the first die 8000a.

As shown in FIG. 8 and FIG. 8A, in some embodiments, on a side of the centerline of the receiving space 140, a linear clearance distance along the second direction between an inner edge and an outer edge of the first root portion 124a is L₅, and a ratio of L₅ to L₃ is greater than 0.65.

By way of example, a ratio of L₅ to L₃ may be 0.65, 0.7, 0.75, 0.8, 0.85, or 0.9.

By way of example, L₅ > 0.65mm.

From the foregoing, it may be understood that, if the thickness of the first root portion 124a is excessively small, the reliability of the connection between the first fixing portion 120 and the lid base 110 is relatively poor.

In order to avoid the foregoing issue, in the present embodiment, the ratio of L₅ to L₃ is designed to be greater than 0.65 so as to ensure that the first root portion 124a has a sufficiently ample thickness, thereby effectively increasing its structural strength and the reliability of the connection between the first fixing portion 120 and the lid base 110. When the method of manufacturing the lid assembly does not include the splitting step, the dimension of the second root portion 124b will become excessively large. In such a case, to ensure the strength of the lid 100, it is necessary to ensure that the dimension L₅ of the first root portion 124a is sufficiently large. In that event, on the one hand, the dimension L₃ becomes relatively large, and on the other hand, because the second root portion 124b is of a discontinuous structure, an excessively large dimension will adversely affect the strength of the lid 100. Therefore, the present solution preferably combines inclusion of the piling step with control of the dimension of the second root portion 124b, so as to ensure the strength of the lid 100 without adversely affecting demolding.

As shown in FIG. 8, in certain embodiments, the lid 100 further includes the second fixing portion 130, and the second fixing portion 130 includes a second inner wall 131. The second inner wall 131 is perpendicular to the first direction.

From the foregoing, it may be understood that the second fixing portion 130 supports the sealing portion 710. When the second inner wall 131 of the second fixing portion 130 is perpendicular to the first direction, the second inner wall 131 is planar and is capable of supporting the sealing portion 710 more stably and reliably. During assembly and use of the lid assembly 1000, the sealing portion 710 may be maintained in a flat state, which helps ensure that the sealing portion 710 exhibits favorable sealing performance.

Additionally, the planar second inner wall 131 may also support the terminal 200 more stably and reliably. In mass production, this enables the exposed height of the terminal 200 relative to the first surface 112 to be uniform, which helps improve the consistency of the lid assembly 1000.

As shown in FIG. 8, in some embodiments, along the first direction, a linear clearance distance between the second inner wall 131 and the first surface 112 is H₁, where 1mm ≤ H₁≤ 1.3mm.

By way of example, H₁ may be 1mm, 1.1mm, 1.2mm, or 1.3mm.

If H₁ is excessively large, the second fixing portion 130 downwardly protrudes beyond the second surface 113 by an excessive height, thereby unduly occupying space within the cell that is intended to accommodate the electrode assembly 3000, which results in a reduced energy density of the cell. If H₁ is excessively small, the terminal 200 protrudes beyond the first surface 112 by an excessive height, such that, when the cell is assembled into a battery pack, the terminal 200 unduly occupies space within the battery pack, thereby reducing the energy density of the battery pack.

To avoid the foregoing issues, in the present embodiment, H₁ is set to 1mm ≤ H₁ ≤ 1.3mm, which ensures that a cell employing the lid assembly 1000 of the present embodiment has a relatively high energy density, and further ensures that a battery pack constructed from such cells also has a relatively high energy density.

As shown in FIG. 8, in some embodiments, the first fixing portion 120 includes the second sub-portion 125. The second sub-portion 125 is integrally formed with the first sub-portion 123 and extending along the second direction toward the centerline of the receiving space 140. A thickness of the lid base 110 is H₃. A dimension of the second sub-portion 125 in the first direction is H₂ A ratio of H₂ to H₃ ranges from 0.14 to 0.48.

It should be noted that the second sub-portion 125 is the portion of the first fixing portion 120 that is bent, as shown in FIG. 6L.

By way of example, the ratio of H₂ to H₃ may be 0.14, 0.18, 0.2, 0.24, 0.28, 0.3, 0.34, 0.38, 0.4, 0.44, or 0.48.

By way of example, H₂ may range from 0.7mm to 0.9mm, e.g., 0.7mm, 0.8mm, or 0.9mm.

If the ratio of H₂ to H₃ is too large, a thickness of the second sub-portion 125 becomes excessive. When injection-molding an upper insulating portion 720 that covers the first fixing portion 120, because the second sub-portion 125 occupies an excessive amount of space within a mold cavity and is overly close to an inner wall of the mold cavity, a thickness of a portion of the upper insulating portion 720 that covers the first fixing portion 120 becomes insufficient, resulting in low structural strength and a propensity for cracking. If the ratio of H₂ to H₃ is too small, the thickness of the second sub-portion 125 becomes insufficient, its structural strength is low, and it is difficult to achieve reliable positional limiting and fixation of the terminal 200.

To avoid the foregoing issues, in the present embodiment, the ratio of H₂ to H₃ is set to 0.14 to 0.48, which ensures that the second sub-portion 125 of the first fixing portion 120 has a sufficiently large thickness to enhance its structural strength, and at least enables the second sub-portion 125 to provide positional limiting for the terminal 200 installed in the receiving space 140 so as to achieve a reliable connection between the lid 100 and the terminal 200. At the same time, this also ensures that the upper insulating portion 720 covering the first fixing portion 120 has a sufficiently large thickness, effectively preventing cracking and the like in the upper insulating portion 720, thereby helping to ensure the insulating performance of the upper insulating portion 720 and improving the safety performance of the cell.

As shown in FIG. 8, in some embodiments, the second fixing portion 130 has a dimension H₄ along the first direction, and a ratio of H₄ to H₃ ranges from 0.15 to 0.5.

By way of example, the ratio of H₄ to H₃ may be 0.15, 0.18, 0.2, 0.24, 0.28, 0.3, 0.34, 0.38, 0.4, 0.44, 0.48, or 0.5.

By way of example, H₄ may range from 0.8mm to 1mm, for example, 0.8mm, 0.9mm, or 1mm.

If the ratio of H₄ to H₃ is excessively large, a thickness of the second fixing portion 130 will be excessively small, resulting in relatively low structural strength of the second fixing portion 130 itself, which increases the risk of cracking at the second connection. On the one hand, the second fixing portion 130 will also hardly provide an effective limiting function for the terminal 200; on the other hand, the second fixing portion 130 may undergo bending deformation when subjected to compression, making it difficult to effectively compress the sealing portion 710, which will result in a lower sealing performance of the sealing portion 710 and adversely affect the sealing performance of the lid assembly 1000. If the ratio of H₄ to H₃ is excessively large, it will also cause a thickness of the first fixing portion 120 to be excessively small, resulting in a relatively low structural strength of the first fixing portion 120 itself, which increases the risk of cracking at the first connection, and the first fixing portion 120 will hardly provide an effective fixing function for the terminal 200.

To avoid the foregoing problems, in this embodiment the ratio of H₄ to H₃ is set to range from 0.15 to 0.5, which ensures that the first fixing portion 120 and the second fixing portion 130 have a relatively high structural strength, not only providing an effective limiting and fixing function for the terminal 200, but also effectively compressing the sealing portion 710 so as to ensure that the sealing performance of the sealing portion 710 is stable and reliable, thereby helping to improve the sealing performance of the lid assembly 1000.

As shown in FIG. 7 and FIG. 8, in some embodiments, the lid 100 further includes the second fixing portion 130. The first fixing portion 120 includes a first inner wall 121, and the second fixing portion 130 includes the second inner wall 131. The first inner wall 121, the second inner wall 131, and the stepped portion 150 that connects the first inner wall 121 and the second inner wall 131 jointly define the receiving space 140, and the stepped portion 150 protrudes toward the first surface 112 beyond the second inner wall 131.

The provision, in the lid 100, of the stepped portion 150 connected to the first inner wall 121 and the second inner wall 131 affords the same advantageous effects as those of the foregoing step portion 150, and therefore details thereof are not repeated herein.

As shown in FIG. 7 and FIG. 8, in some embodiments, the second surface 113 is provided with the groove 111 that surrounds the second fixing portion 130, and, along the second direction, the groove 111 extends to the second fixing portion 130.

By way of example, the groove 111 is an annular groove surrounding the second fixing portion 130.

In combination with the foregoing, when forming the lid 100, the groove 111 may be formed by pressing the second surface 113. After the groove 111 is formed, the material originally at the position of the groove 111 will be compressed and displaced toward adjacent locations, thereby increasing the structural strength of structures at locations adjacent to the groove 111.

By way of example with reference to the structure and orientation shown in FIG. 8, the second fixing portion 130 is located to the left of the groove 111, adjacent thereto. Accordingly, after the groove 111 is formed, the material originally at the location of the groove 111 is displaced toward the junction between the second fixing portion 130 and the lid base 110, thereby helping to increase the structural strength at the junction between the second fixing portion 130 and the lid base 110 and to prevent fracture at that junction.

As shown in FIG. 7 and FIG. 8, in some embodiments, in the first direction, the stepped portion 150 is connected to the first inner wall 121 to form an inner connecting portion d. In the first direction, a projection of the inner connecting portion d onto the second surface 113 falls within the groove 111.

Again by way of example with reference to the structure and orientation shown in FIG. 8, the first fixing portion 120 is positioned above the groove 111, adjacent thereto. Accordingly, after the groove 111 is formed, the material originally at the location of the groove 111 is displaced toward the junction between the first fixing portion 120 and the lid base 110, thereby helping to increase the structural strength at the junction between the first fixing portion 120 and the lid base 110 and to prevent fracture at that junction.

As shown in FIG. 7 and FIG. 8, in some embodiments, the lid assembly 1000 includes the terminal 200 and the insulating sealing structure 700. The terminal 200 and the insulating sealing structure 700 are at least partially disposed within the receiving space 140, and the lid 100 and the terminal 200 are connected via the insulating sealing structure 700. The insulating sealing structure 700 includes the upper insulating portion 720 and the sealing portion 710.

It should be noted that the terminal 200 includes a columnar terminal body 210 and a protrusion 220 that projects from the terminal body 210 in the second direction. The protrusion 220 may be provided annularly around a circumferential sidewall of the terminal body 210, and the circumferential sidewall of the terminal body 210 is arranged around the centerline of the terminal 200.

To enable the terminal 200, after the first fixing portion 120 and the second fixing portion 130 have been formed, to pass smoothly through an inner bore defined by the first fixing portion 120, a bore diameter defined by the first fixing portion 120 may be set larger than an outer diameter of the protrusion 220. Because the second fixing portion 130 is required to limit the terminal 200 in the first direction, a bore diameter defined by the second fixing portion 130 is designed to be smaller than the outer diameter of the protrusion 220.

Specifically, as shown in FIG. 8, in the second direction, the first fixing portion 120 is disposed on a side of the terminal 200 that is radially farther from the centerline of the terminal 200, whereas the second fixing portion 130 needs to spatially overlap with a portion of the terminal 200 (for example, the protrusion 220) in order to limit the terminal 200. Therefore, in the second direction, the second fixing portion 130 may be positioned closer to the centerline of the terminal 200 to ensure reliable limiting of the terminal 200, while the first fixing portion 120 may be positioned farther from the centerline of the terminal 200 to prevent the first fixing portion 120 from obstructing the terminal 200 from entering the receiving space 140.

By way of example, the sealing portion 710 may be fitted over the terminal body 210 of the terminal 200 and disposed circumferentially about the terminal body 210.

By way of example, the material of the sealing portion 710 may include an elastic insulating material, such as rubber or plastic.

By way of example, the upper insulating portion 720 may be formed by injection molding of an insulating material.

Taking the structure and orientation shown in FIG. 8 as an example, a lower surface of the protrusion 220 of the terminal 200 and the second inner wall 131 may cooperate to jointly compress the sealing portion 710 interposed therebetween, thereby causing that portion of the sealing portion 710 to undergo compressive deformation so as to achieve a sealing effect. After compressive deformation, an upper end of the sealing portion 710 may extend into a space between the protrusion 220 and the stepped portion 150, and a lower end thereof may extend out of the receiving space 140.

By extending into the region between the protrusion 220 and the stepped portion 150, the sealing portion 710 may increase a contact area between the sealing portion 710 and an inner wall of the receiving space 140, which is conducive to improving the sealing performance of the sealing portion 710. Additionally, the sealing portion 710 may provide insulating isolation between the protrusion 220 and the stepped portion 150, preventing contact therebetween and thereby contributing to enhanced insulation reliability between the terminal 200 and the lid 100.

With reference to FIG. 7 and FIG. 8, it can be seen that a majority of the terminal 200 is disposed within the receiving space 140, and the continuous insulating sealing structure 700 having a specific width (a dimension along the second direction) is formed between the terminal 200 and the inner wall of the receiving space 140. This portion of the insulating sealing structure 700 has a high structural strength, ensuring a stable and reliable connection between the terminal 200 and the lid 100, and is also insulating, thereby providing reliable insulation between the terminal 200 and the lid 100. It further fills gaps within the receiving space 140 so that electrolyte in the cell cannot leak outward through the receiving space 140, thereby helping to improve cell safety performance.

FIG. 9 illustrates an enlarged view of a fourth structure of a portion C in FIG. 7.

As shown in FIG. 8 and FIG. 9, in some embodiments, at least one of the first fixing portion 120, the terminal 200, and the stepped portion 150 is provided with an anti-rotation structure 800. The specific configuration of the anti-rotation structure 800 may be exemplified by the following embodiments.

The anti-rotation structure 800 provided on the first fixing portion 120 is the first anti-rotation structure 810, and the upper insulating portion 720 is formed with a first insulating anti-rotation structure 721. One of the first anti-rotation structure 810 and the first insulating anti-rotation structure 721 is a groove structure, and the other is a protrusion structure fitted within the groove structure.

By way of example, multiple first anti-rotation structures 810 may be provided, arranged at intervals circumferentially about the centerline of the receiving space 140.

By way of example, the upper insulating portion 720 may be formed by injection molding. During injection molding, if the first anti-rotation structure 810 is a protrusion, a molding material envelops the protrusion and, after curing, forms a groove structure. If the first anti-rotation structure 810 is a groove structure, the molding material fills the groove and, after solidification, forms a protrusion.

It should be noted that, as shown in FIG. 8, the first anti-rotation structure 810 is configured as a groove structure, and the first insulating anti-rotation structure 721 is a protrusion fitted within the groove structure. As shown in FIG. 9, the first insulating anti-rotation structure 721 is configured as a groove structure, and the first anti-rotation structure 810 is a protrusion fitted within the groove structure.

When the first anti-rotation structure 810 and the first insulating anti-rotation structure 721 are in mating engagement, a reliable connection is ensured between the upper insulating portion 720 and the first fixing portion 120, thereby preventing relative displacement or rotation therebetween. Furthermore, as is apparent from the foregoing, the terminal 200 is connected to the first fixing portion 120 of the lid 100 via the upper insulating portion 720; accordingly, when the upper insulating portion 720 and the first fixing portion 120 are prevented from relative rotation, this likewise facilitates a stable connection between the terminal 200 and the lid 100 and prevents relative torsion therebetween.

For a cell employing the lid assembly 1000 of the present embodiment, once the cell is secured, the lid 100 is correspondingly secured. By virtue of the upper insulating portion 720, the terminal 200 and the lid 100 may remain relatively stationary without undergoing relative torsion, thereby ensuring that the terminal 200 is able to form a reliable connection with an external circuit, and further ensuring that the terminal 200 is able to effectively compress the sealing portion 710 so as to prevent failure of the sealing portion 710 and avoid leakage of electrolyte from the cell.

As shown in FIG. 8 and FIG. 9, in some embodiments, the anti-rotation structure 800 provided on the terminal 200 is a second anti-rotation structure 820, and the upper insulating portion 720 is formed with a second insulating anti-rotation structure 722. One of the second anti-rotation structure 820 and the second insulating anti-rotation structure 722 is configured as a groove structure, and the other is configured as a protrusion structure fitted within the groove structure.

By way of example, multiple second anti-rotation structures 820 may be provided and disposed at intervals around the centerline of the terminal 200.

By way of example, the upper insulating portion 720 may be formed by injection molding. During injection molding, if the second anti-rotation structure 820 is a protrusion, a molding material envelops the protrusion and, upon solidification, forms a groove structure. If the second anti-rotation structure 820 is a groove structure, the molding material fills the groove structure and, upon solidification, forms a protrusion.

It should be noted that, as shown in FIG. 8, the second insulating anti-rotation structure 722 is configured as a groove structure, and the second anti-rotation structure 820 is a protrusion fitted within the groove structure. As shown in FIG. 9, the second anti-rotation structure 820 is configured as a groove structure, and the second insulating anti-rotation structure 722 is a protrusion fitted within the groove structure.

The advantageous effects of the mating engagement between the second anti-rotation structure 820 and the second insulating anti-rotation structure 722 are similar to those of the mating engagement between the aforementioned first anti-rotation structure 810 and the first insulating anti-rotation structure 721, and will not be elaborated further herein.

FIG. 10 is a partial schematic view of the lid 100 of the lid assembly 1000 having a fifth structure.

As shown in FIG. 9 and FIG. 10, in some embodiments, the anti-rotation structure 800 provided on the stepped portion 150 is the anti-rotation groove 830, and the upper insulating portion 720 is formed with a third insulating anti-rotation structure 723. The third insulating anti-rotation structure 723 is engaged within the anti-rotation groove 830.

The advantageous effects of the mating engagement between the anti-rotation groove 830 and the third insulating anti-rotation structure 723 are similar to the advantageous effects of the aforementioned mating engagement between the first anti-rotation structure 810 and the first insulating anti-rotation structure 721, and therefore will not be repeated herein.

Based on the same inventive concept, and in conjunction with the foregoing descriptions of the lid assembly 1000 in the above embodiments, the present embodiment provides a cell that has the corresponding technical effects of the lid assembly 1000 of the above embodiments, which will not be repeated here.

FIG. 11 is a schematic view of a cell according to an embodiment of the present disclosure.

As shown in FIG. 11, the cell includes the housing 2000, the electrode assembly 3000, and the lid assembly 1000 as in the above embodiments. The lid assembly 1000 is connected to the housing 2000, and the electrode assembly 3000 is disposed within a space defined by the lid assembly 1000 and the housing 2000.

It is to be noted that an end of the terminal 200 of the lid assembly 1000 that is proximate to the electrode assembly 3000 may extend out of the insulating sealing structure 700 (i.e., extend out of the lower insulating portion 730) so as to be exposed within the space in which the electrode assembly 3000 is located, thereby facilitating electrical connection between the terminal 200 and tabs of the electrode assembly 3000.

## Claims

1. A method for manufacturing a lid assembly (1000), comprising:
a hole-forming step: providing a plate (4000) and forming a through-hole (4100) on the plate (4000), wherein the through-hole (4100) extends, in a first direction, through a first surface (112) and a second surface (113) of the plate (4000), the first direction is a thickness direction of the plate (4000);
a punching step: extruding, from the second surface (113) toward the first surface (112), an edge of the through-hole (4100) so as to form a columnar protrusion (4200) protruding from the first surface (112), wherein the columnar protrusion (4200) comprises a columnar inner wall (4210), a columnar outer wall (4220), and an annular end surface (4240) respectively connected to the columnar inner wall (4210) and the columnar outer wall (4220);
a splitting preparation step: fitting an annular first die (8000a) over an exterior of the columnar protrusion (4200) and bringing the first die (8000a) into abutment with the first surface (112), wherein the first die (8000a) is spaced apart from the columnar outer wall (4220);
a splitting step: using a second die (8000) to stamp, from the annular end surface (4240) toward the second surface (113), a portion of the columnar protrusion (4200) adjacent to the columnar inner wall (4210) so as to form a second fixing portion (130), while a portion of the columnar protrusion (4200) adjacent to the columnar outer wall (4220) forms a first fixing portion (120).

2. The method for manufacturing the lid assembly (1000) according to claim 1, wherein in the splitting preparation step, along a second direction that is perpendicular to the first direction, a minimum linear clearance distance between the first die (8000a) and the columnar outer wall (4220) is L₁, on a same side of a centerline of the columnar protrusion (4200), a linear clearance distance along the second direction between an inner edge and an outer edge of the annular end surface (4240) is L, a ratio of L₁ to L is greater than 0 and less than or equal to 0.06.

3. The method for manufacturing the lid assembly (1000) according to claim 1, wherein an inner wall of the first die (8000a) is disposed inclined, relative to the first direction, toward a root portion of the columnar protrusion (4200), with an inclination angle a, where 0° < a ≤ 10°, an end surface of the first die (8000a) is in abutment with the first surface (112), a first fillet (8100) is provided at a junction between the inner wall of the first die (8000a) and the end surface, and a radius R of the first fillet (8100) satisfies 0 < R ≤ 2mm.

4. The method for manufacturing the lid assembly (1000) according to claim 1, wherein on a same side of a centerline of the columnar protrusion (4200), a linear clearance distance along a second direction between an inner edge and an outer edge of the annular end surface (4240) is L, along the first direction, the second die (8000) has a maximum linear clearance distance L₂ in the second direction between an outer edge of a projection of the annular end surface (4240) and the outer edge of the annular end surface (4240), and a ratio of L₂ to L is 0.5 to 0.6, the second direction is perpendicular to the first direction.

5. The method for manufacturing the lid assembly (1000) according to claim 1, wherein the splitting step comprises:
during the stamping operation, along the first direction, making a lower surface of the second fixing portion (130) to be lower than the second surface (113), and forming a stepped portion (150) at a junction between an inner wall of the first fixing portion (120) and an inner wall of the second fixing portion (130).

6. The method for manufacturing the lid assembly (1000) according to claim 1, wherein in the punching step, a second fillet (4230) is formed between the columnar inner wall (4210) and the second surface (113), a third fillet (4250) is formed between the columnar outer wall (4220) and the first surface (112);
after the punching step and before the splitting step, the method further comprises:
a piling preparation step in which a portion of a third die (6000) is fitted over an exterior of the columnar protrusion (4200) and is spaced from the columnar outer wall (4220) so as to define a space allowing for deformation of the columnar protrusion (4200), and another portion of the third die (6000) abuts against the annular end surface (4240); and
a piling step in which the second die (8000) stamps the annular end surface (4240) toward the second surface (113) to reduce a radius of the second fillet (4230) and a radius of the third fillet (4250).

7. The method for manufacturing the lid assembly (1000) according to claim 6, wherein the piling step further comprises supporting a location of the second surface (113) corresponding to the columnar protrusion (4200) so as to form a groove (111) on the second surface (113).

8. The method for manufacturing the lid assembly (1000) according to claim 5, wherein the splitting step further comprises:
when stamping the portion of the columnar protrusion (4200) proximate to the columnar inner wall (4210), supporting a location of the second surface (113) corresponding to the columnar protrusion (4200) so as to form a groove (111) on the second surface (113);
forming a first anti-rotation structure (810) on an inner surface of the first fixing portion (120) or forming an anti-rotation groove (830) on the stepped portion (150).

9. The method for manufacturing the lid assembly (1000) according to any one of claims 1-8, wherein the first fixing portion (120) comprises a first end (122) distal from the plate (4000), the method for manufacturing the lid assembly (1000) further comprises:
pressing the first end (122) toward the second surface (113) so as to bend the first end (122) toward a centerline of the first fixing portion (120);
the first fixing portion (120) and the second fixing portion (130) define a receiving space (140), the method for manufacturing the lid assembly (1000) further comprises:
securing a terminal (200) fitted with a sealing portion (710) within the receiving space (140), and injection-molding an upper insulating portion (720) such that the upper insulating portion (720) connects the first fixing portion (120) with the terminal (200).

10. A lid assembly (1000), which is manufactured by the method for manufacturing the lid assembly (1000) according to any one of claims 1-9, the lid assembly (1000) comprising: a lid (100), the lid (100) comprising a lid base (110) at least partially formed from a plate (4000) and a first fixing portion (120), and a receiving space (140) defined by a through-hole (4100);
wherein the first fixing portion (120) comprises a first sub-portion (123) extending along the first direction, the first sub-portion (123) comprises a first root portion (124a) and a second root portion disposed along a second direction, the first root portion (124a) is positioned closer to the receiving space (140) than the second root portion (124b), the first root portion (124a) is integrally formed with the lid base (110), and the second root portion (124b) is discontinuously arranged relative to the lid base (110) and abutted against a first surface (112), and the second direction is perpendicular to the first direction.

11. The lid assembly (1000) according to claim 10, wherein on a side of a centerline of the receiving space (140), a minimum dimension, measured along the second direction, of an end portion of the first sub-portion (123) that is remote from the lid base (110) is L₄, a sum of dimensions, measured along the second direction, of the first root portion (124a) and the second root portion (124b) is L₃, and L₃ is greater than L_{4;}
on the side of the centerline of the receiving space (140), an effective connection dimension of the first root portion (124a) and the second root portion (124b), measured along the second direction is L₅, and a ratio of L₅ to L₃ is greater than 0.65.

12. The lid assembly (1000) according to claim 10, wherein an outer wall of the first sub-portion (123) is disposed inclined, relative to the first direction, toward a centerline of the receiving space (140), the first sub-portion (123) satisfies at least one of the following conditions:
an inner wall of the first sub-portion (123) is parallel to the first direction;
an inclination angle b of the outer wall of the first sub-portion (123) satisfies 0° < b ≤ 10°.

13. The lid assembly (1000) according to claim 10, wherein a thickness of the lid base (110) is H₃, the lid base (110) satisfies at least one of the following conditions:
the first fixing portion (120) comprises a second sub-portion (125) that is integrally formed with the first sub-portion (123) and extends toward a centerline of the receiving space (140) along the second direction, a dimension of the second sub-portion (125) along the first direction is H₂, and a ratio of H₂ to H₃ is 0.14 to 0.48;
the lid (100) further comprises a second fixing portion (130), a dimension of the second fixing portion (130) along the first direction is H₄, and a ratio of H₄ to H₃ is 0.15 to 0.5.

14. The lid assembly (1000) according to claim 10, wherein the lid (100) further comprises a second fixing portion (130), along the first direction, a lower surface of the second fixing portion (130) is lower than the second surface (113).

15. A cell, comprising a housing (2000), an electrode assembly (3000), and the lid assembly (1000) according to any one of claims 10-14, wherein the lid assembly (1000) is connected to the housing (2000), and the electrode assembly (3000) is disposed within a space defined by the lid assembly (1000) and the housing (2000);
wherein the lid assembly (1000) comprises a terminal (200) and an insulating sealing structure (700), and the lid (100) and the terminal (200) are connected through the insulating sealing structure (700);
the insulating sealing structure (700) comprises an upper insulating portion (720) and a sealing portion (710).
